(19) Europäisches Patentamt
European Patent Office
Office européen des brevets

(11) EP 4 131 526 A1

(12) # EUROPEAN PATENT APPLICATION
published in accordance with Art. 153(4) EPC

(43) Date of publication:
**08.02.2023 Bulletin 2023/06**

(21) Application number: **21775570.1**

(22) Date of filing: **08.03.2021**

(51) International Patent Classification (IPC):
***H01M 8/1039*** (2016.01) ***H01M 8/1044*** (2016.01)
***H01M 8/1053*** (2016.01) ***H01M 8/1067*** (2016.01)
***H01M 8/18*** (1974.07)

(52) Cooperative Patent Classification (CPC):
**H01M 8/1039; H01M 8/1044; H01M 8/1053; H01M 8/1067; H01M 8/18;** Y02E 60/50

(86) International application number:
**PCT/JP2021/008903**

(87) International publication number:
**WO 2021/192949 (30.09.2021 Gazette 2021/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.03.2020 JP 2020052299**

(71) Applicant: **Toray Industries, Inc.**
**Tokyo 103-8666 (JP)**

(72) Inventors:
- **MATSUI, Kazuma**
  **Otsu-shi, Shiga 520-8558 (JP)**
- **YOSHIOKA, Eiko**
  **Tokyo 103-8666 (JP)**
- **KONISHI, Takashi**
  **Otsu-shi, Shiga 520-8558 (JP)**
- **OGATA, Daisuke**
  **Otsu-shi, Shiga 520-2141 (JP)**
- **IZUHARA, Daisuke**
  **Otsu-shi, Shiga 520-8558 (JP)**

(74) Representative: **Hoefer & Partner Patentanwälte mbB**
**Pilgersheimer Straße 20**
**81543 München (DE)**

(54) **ELECTROLYTE MEMBRANE AND REDOX FLOW BATTERY USING SAME**

(57) Provided is an electrolyte membrane including at least the following: an A-layer composed of an ion-conducting fluorinated polymer and a non-ion-conducting fluorinated polymer; and a B-layer composed of an ion-conducting hydrocarbon polymer, wherein the ion-conducting hydrocarbon polymer is dispersed in the A-layer. Provided is an electrolyte membrane having excellent oxidation resistance. In addition, provided is an electrolyte membrane for a redox-flow battery, in which the electrolyte membrane used as a barrier membrane for a redox-flow battery makes it possible to achieve high power efficiency and stable charge and discharge even in long-term use.

EP 4 131 526 A1

## Description

### TECHNICAL FIELD

The present invention relates to an electrolyte membrane, and more specifically relates to an electrolyte membrane suitable for a redox-flow battery.

### BACKGROUND ART

In recent years, renewable energy such as sunlight and wind force has been increasingly utilized. On the other hand, solar radiation, wind velocity, and the like involve large variations in the amount of power generation. What is being demanded is a large battery system that materializes the stabilization of a renewable energy output, the leveling of an electric load, and the stabilization of a power system. Examples of known storage batteries include lead storage batteries, sodium-sulfur (NAS) batteries, lithium-ion batteries, and redox-flow batteries. Among these, a redox-flow battery, which is charged and discharged with a pump circulating an electrolyte solution containing an active material, makes it possible to store the electrolyte solution in an external tank, and hence, is easy to make large and easier to renew than another type of storage battery. For these reasons and others, redox-flow batteries have been increasingly utilized.

A redox-flow battery is a battery that is based on the utilization of oxidation-reduction reactions on electrodes, and repeats charge and discharge with pump-driven circulation in the battery. Examples of the active material contained in the electrolyte solution include iron-chromium materials, chromium-bromine materials, titanium-manganese materials, bromine-zinc materials, and the like. In particular, vanadium materials having different valences, when used as active materials for the cathode and the anode, are less prone to cause such a side reaction as to generate a precipitate during the electrode reaction, less deteriorate the electrolyte solution, and hence, are considered to be suitable for long-term use.

A polymer electrolyte membrane is used as a barrier membrane that is interposed between the cathode containing an electrode and a cathode active material and the anode containing an electrode and an anode active material. Examples of characteristics demanded for an electrolyte membrane include low permeability to an active material in light of the purpose of maintaining the battery output and the energy efficiency. In addition, such a membrane, when incorporated in a battery, is demanded to be able to contribute to long-term stable charge and discharge.

During charge and discharge, the positive electrode (cathode side) in particular is exposed to a high-potential environment at 1.5 V or more, and thus, the electrolyte membrane is demanded to have electrical oxidation resistance. In cases where the oxidation resistance is insufficient, the electrolyte membrane will undesirably deteriorate during charge and discharge, and decreased in the charge and discharge characteristics in the long term.

Patent Literature 1 discloses the placement of an adhesion-promoting layer containing an ion-conducting polymer and a non-ion-conducting polymer for the purpose of enhancing the adhesiveness between a polymer electrolyte membrane (PEM) and a catalyst layer in a membrane electrode assembly (MEA) in a fuel cell.

Patent Literature 2 discloses an electrolyte membrane that is an ion-conducting membrane composed of a first layer and a second layer, wherein the first layer contains a perfluorosulfonic polymer, and the second layer contains a sulfonated hydrocarbon polymer, whereby hydrogen crossover in a fuel cell is decreased.

#### Citation List

#### Patent Literature

Patent Literature 1: Japanese Patent Laid-open Publication No. 2008-512844
Patent Literature 2: Japanese Patent Laid-open Publication No. 2015-502629

### SUMMARY OF INVENTION

#### Technical Problem

The structure described in Patent Literature 1 has a problem in that the structure does not afford sufficient durability when used as an electrolyte membrane for a redox-flow battery.

The electrolyte membrane described in Patent Literature 2 has a total thickness of 5 μm to 50 μm, in which a hydrocarbon electrolyte membrane as a second layer has a thickness of 2 μm or less, and the electrolyte membrane has a problem in that, when this electrolyte membrane is used in a redox-flow battery, an increase in the vanadium ion

permeability is accompanied by a decrease in the current efficiency (power efficiency) and a decrease in the mechanical durability.

Accordingly, an object of the present invention is, for example, to provide an electrolyte membrane suitable for a redox-flow battery. That is, an object of the present invention is to provide an electrolyte membrane that makes it possible to achieve high power efficiency in a redox-flow battery and stable charge and discharge in long-term use.

Solution to Problem

An electrolyte membrane according to the present invention has at least one of the following constituents [1] or [2] to solve the above-mentioned problems. That is,

[1] an electrolyte membrane including at least the following: an A-layer composed of an ion-conducting fluorinated polymer and a non-ion-conducting fluorinated polymer; and a B-layer composed of an ion-conducting hydrocarbon polymer, wherein the ion-conducting hydrocarbon polymer is dispersed in the A-layer;
or
[2] an electrolyte membrane including at least the following: an A-layer composed of an ion-conducting fluorinated polymer and a non-ion-conducting fluorinated polymer; and a B-layer composed of an ion-conducting hydrocarbon polymer, wherein the electrolyte membrane has the lowest crystal melting peak (Tm) of less than 175°C as measured in a 3rd run by differential scanning calorimetry (DSC).

In addition, a redox-flow battery according to the present invention has the following constituent. That is,
a redox-flow battery including the electrolyte membrane used as a barrier membrane configured to isolate and separate a cathode and an anode.

In the electrolyte membrane of the above-mentioned [1] according to the present invention, the ion-conducting hydrocarbon polymer dispersed in the A-layer preferably has a dispersion diameter of 0.55 μm or less.

The electrolyte membrane of the above-mentioned [1] according to the present invention preferably satisfies the following numerical formula (1), assuming that the thickness of the A-layer is (11), and that the shortest distance from the outer side of the A-layer to the hydrocarbon polymer in the A-layer is (t2).

$$(t1) - (t2) > 0 \ldots (1)$$

The electrolyte membrane of the above-mentioned [1] according to the present invention preferably has the lowest crystal melting peak (Tm) of less than 175°C as measured in a 3rd run by differential scanning calorimetry (DSC).

For an electrolyte membrane according to the present invention, it is preferable that the non-ion-conducting fluorinated polymer is at least one selected from the group consisting of poly(vinylidene fluoride), poly(vinylidene fluodide), and a copolymer of vinylidene fluoride and another fluorine-containing monomer.

For an electrolyte membrane according to the present invention, it is preferable that the non-ion-conducting fluorinated polymer is a copolymer of vinylidene fluoride and another fluorine-containing monomer.

For an electrolyte membrane according to the present invention, it is preferable that the non-ion-conducting fluorinated polymer is a copolymer of vinylidene fluoride and hexafluoropropylene.

For an electrolyte membrane according to the present invention, it is preferable that the mass ratio of the ion-conducting fluorinated polymer to the non-ion-conducting fluorinated polymer in the A-layer is 25:75 to 55:45.

For an electrolyte membrane according to the present invention, it is preferable that the ion-conducting hydrocarbon polymer contains a structural unit represented by the below-mentioned chemical formulae (1) and (2).
[Chem. 1]

$-O-Ar_1-O-Ar_2-O-$ (1)

[Chem. 2]

$-O-Ar_1-O-Ar_3-O-$ (2)

In the formula, $Ar_1$ and $Ar_2$ are represented by the following chemical formula (3), and $Ar_3$ is represented by the following chemical formula (4).

[Chem. 3]

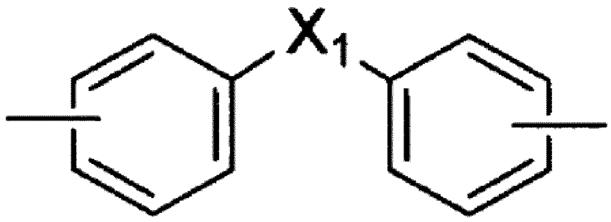

(3)

[Chem. 4]

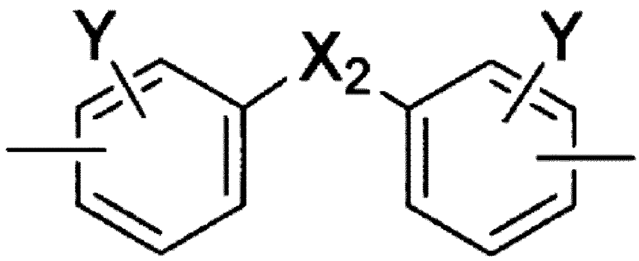

(4)

In the chemical formulae, $X_1$ and $X_2$ independently represent a ketone group (-(C=O)-), ether group (-O-), sulfonic group ($-SO_2-$), or fluorocarbon-containing group ($-C(CF_3)_2-$), and may contain a plurality of the structures. In addition, $X_1$ may be a protecting group. Y represents an ionic group.

For an electrolyte membrane according to the present invention, it is preferable that the ion-conducting hydrocarbon polymer is a random copolymer.

For an electrolyte membrane according to the present invention, it is preferable that the ion-conducting hydrocarbon polymer has a weight-average molecular weight of 300,000 or more.

For an electrolyte membrane according to the present invention, it is preferable that the active material permeation of an aqueous solution having a tetravalent-vanadium concentration of 1.5 $mol \cdot L^{-1}$ and a sulfuric acid concentration of 3.0 $mol \cdot L^{-1}$ is $1,800 \times 10^{-10}$ $cm^2$/minute or less per unit area of the electrolyte membrane.

An electrolyte membrane according to the present invention preferably has a tensile modulus of 0.5 GPa or more at 23°C and at 50% RH.

For an electrolyte membrane according to the present invention, the A-layer is preferably laminated on only one face of the B-layer.

An electrolyte membrane according to the present invention is preferably an electrolyte membrane for use in a redox-flow battery.

For a redox-flow battery according to the present invention, it is preferable that the electrolyte membrane is disposed in such a manner that the A-layer side of the electrolyte membrane is on the cathode side.

Advantageous Effects of Invention

The present invention makes it possible to provide an electrolyte membrane having excellent oxidation resistance. In addition, using the electrolyte membrane as a barrier membrane for a redox-flow battery makes it possible to achieve high power efficiency and stable charge and discharge even in long-term use. That is, a redox-flow battery including an electrolyte membrane according to the present invention has high power efficiency and enhanced durability in long-term drive.

In addition, an electrolyte membrane according to the present invention can be used widely for a fuel cell, water electrolysis apparatus, electrochemical hydrogen compressor, and the like without being limited to a redox-flow battery.

BRIEF DESCRIPTION OF DRAWINGS

FIG. 1 is an enlarged cross-sectional photograph of an electrolyte membrane according to one aspect of the

present invention.

DESCRIPTION OF EMBODIMENTS

In the following, the present invention will be described in detail.

A redox-flow battery involves direct contact between a high-potential electrode and an electrolyte membrane, and thus, has a problem that, in long-time drive, electrons are directly pulled out of not only the active material but also the electrolyte membrane, whereby the electrolyte membrane is electrochemically oxidized and deteriorated. To solve the above-mentioned problems, the basic structure of the electrolyte membrane according to the present invention has at least one A-layer on a B-layer composed of an ion-conducting hydrocarbon polymer, wherein the A-layer is composed of an ion-conducting fluorinated polymer and a non-ion-conducting fluorinated polymer and is less prone to be oxidized in a high-potential environment. The electrolyte membrane having the above-mentioned basic structure makes it possible to solve the above-mentioned problems, and to perform stable charge and discharge even in long-term use.

An electrolyte membrane according to the present invention has the below-mentioned characteristic structure in addition to the above-mentioned basic structure in order to inhibit the deterioration (swelling, peeling, whitening, and the like) of the electrolyte membrane in long-term drive of a redox-flow battery, and to further enhance the durability. That is,

[Embodiment 1] characterized in that an ion-conducting hydrocarbon polymer is dispersed in the A-layer, and
[Embodiment 2] characterized by having the lowest crystal melting peak (Tm) of less than 175°C as measured in a 3rd run by differential scanning calorimetry (DSC).

Hereinafter, the A-layer composed of an ion-conducting fluorinated polymer and a non-ion-conducting fluorinated polymer and the B-layer composed of a hydrocarbon polymer are referred to the "A-layer" and the "B-layer" respectively for short.

In the present invention, the ion-conducting fluorinated polymer refers to a polymer that has a main chain containing a perfluorocarbon as a main constituent unit, and also contains an ionic group added to the main chain or a side chain. Examples of such a fluorine polymer electrolyte include a perfluorocarbon polymer that contains a sulfonic group (and may contain an ethereal oxygen atom). Among others, a copolymer having a repeating unit based on tetrafluoroethylene and a repeating unit of a perfluorocarbon having a sulfonic group is preferable. Examples of commercially available products of such a copolymer include: perfluorocarbon sulfonic polymers such as "Nafion" (registered trademark; manufactured by DuPont Co., Ltd.) and "Aquivion" (registered trademark; manufactured by Solvay S.A.); polytrifluorostyrenesulfonic polymers; perfluorocarbonphosphonic polymers; trifluorostyrenesulfonic polymers; ethylene-tetrafluoroethylene-g-styrenesulfonic polymers; ethylene-tetrafluoroethylene copolymers; polyvinylidene fluoride-perfluorocarbonsulfonic polymers; ethylene-tetrafluoroethylene copolymers; resins containing trifluorostyrene or the like as a base polymer; and the like. From a power generation performance viewpoint such as heat resistance or chemical stability, fluorine polymer electrolytes constituted by a perfluorocarbonsulfonic polymer are particularly preferable.

In addition, examples of non-ion-conducting fluorinated polymers include poly(vinylidene fluoride), copolymers of vinylidene fluoride and hexafluoropropylene, copolymers of vinylidene fluoride and trifluoroethylene, copolymers of vinylidene fluoride and tetrafluoroethylene, poly(vinylidene fluodide), and the like. Among these, copolymers of vinylidene fluoride and another fluorine-containing monomer (the above-mentioned fluoroalkylene or the like) are preferable, and copolymers of vinylidene fluoride and hexafluoropropylene are particularly preferable, from the viewpoint of comparatively decreasing the dispersion diameter of the ion-conducting hydrocarbon polymer in the A-layer, or from the viewpoint of comparatively lowering the crystal melting peak (Tm) of the electrolyte membrane.

The electrolyte membrane according to the embodiment 1 of the present invention has the above-mentioned basic structure, and in addition, is characterized in that the ion-conducting hydrocarbon polymer is dispersed in the A-layer. That is, the electrolyte membrane is characterized in that part of the ion-conducting hydrocarbon polymer of the B-layer is dispersed in the A-layer.

That the ion-conducting hydrocarbon polymer is dispersed in the A-layer can be verified, for example, by observing a cross section of the electrolyte membrane under an electron microscope (transmission electron microscope (TEM) or scanning electron microscope (SEM)).

FIG. 1 is a partially enlarged photograph of a cross section of an electrolyte membrane according to one aspect of the present invention (a photograph illustrating part of the A-layer and the B-layer). The photograph makes it possible to verify that the ion-conducting hydrocarbon polymer (P) is dispersed in the A-layer (A-layer).

The ion-conducting hydrocarbon polymer in the A-layer is preferably dispersed, for example, at high density in the interface side region on the B-layer from the viewpoint of inhibiting the deterioration of the electrolyte membrane in long-term drive of a redox-flow battery to enhance the durability. Here, the interface side region is suitably, for example, a region corresponding to up to 50% of the thickness of the A-layer from the interface with the B-layer. For example, in cases where the thickness of the A-layer is 5 μm, a region 2.5 μm across from the interface with the B-layer is the

interface side region. Furthermore, the interface side region is preferably a region corresponding to 40% of the thickness of the A-layer, more preferably a region corresponding to 30% of the thickness of the A-layer.

In number, preferably 70% or more of all of the ion-conducting hydrocarbon polymer portions dispersed are present in the interface side region, more preferably 80% or more are present, still more preferably 90% or more are present, particularly preferably 95% or more are present. On the other hand, from the viewpoint of durability in long-term operation, it is preferable that no dispersion of the ion-conducting hydrocarbon polymer is present in the outer side of the A-layer (the opposite side from the B-layer).

In the present invention, it is suitable that the ion-conducting hydrocarbon polymer dispersed has, for example, a dispersion diameter of 0.10 μm or more. The dispersion diameter of 0.10 μm or more can be comparatively easily identified in the observation of a cross section of the electrolyte membrane as illustrated in FIG. 1 (containing the whole region of the A-layer in the thickness direction and at least part of the B-layer), and in addition, is presumably the minimum size that influences the characteristics (performance) of the electrolyte membrane, the effects of the present invention, and the like.

The above-mentioned electrolyte membrane according to the present invention can be obtained, for example, by coating (wet-coating) the B-layer with the A-layer. When the A-layer is applied, the B-layer may be dry (in a wet-on-dry method), or may be wet (in a wet-on-wet method).

As above-mentioned, a wet-on-dry method is preferable from the viewpoint of dispersing the ion-conducting hydrocarbon polymer at high density in the interface side region. Furthermore, a solvent to be used as the A-layer coating liquid is preferably the same kind of solvent as a solvent to be used to form a membrane as the B-layer. Preferable examples of the solvent include aprotic polar solvents. In addition, suitable examples include A-methyl-2-pyrrolidone (hereinafter referred to as NMP), dimethyl sulfoxide (hereinafter referred to as DMSO), *N,N*-dimethylformamide (hereinafter referred to as DMF), *N*,*N*-dimethylacetoamide (hereinafter referred to as DMAc), and the like. The present invention is not limited thereto.

The A-layer can be applied to the B-layer directly or with another layer interposed therebetween, and is preferably applied directly. In cases where such another layer is interposed, the another layer is preferably an ultrathin membrane. Specifically, the another layer suitably has a thickness of 1 μm or less, preferably 0.5 μm or less. That is, it is preferable for an electrolyte membrane according to the present invention that the A-layer is laminated directly on the B-layer.

In an electrolyte membrane according to the present invention, the ion-conducting hydrocarbon polymer dispersed in the A-layer preferably has a comparatively smaller dispersion diameter from the viewpoint of inhibiting the deterioration of the electrolyte membrane in long-term drive of a redox-flow battery to enhance the durability. Specifically, the ion-conducting hydrocarbon polymer dispersed in the A-layer preferably has a dispersion diameter of 0.55 μm or less, more preferably 0.50 μm or less, still more preferably 0.40 μm or less, particularly preferably 0.30 μm or less, most preferably 0.25 μm or less. The lower limit is subject to no particular limitation, and suitably approximately 0.10 μm as above-mentioned. Here, the dispersion diameter of the ion-conducting hydrocarbon polymer means a number-average dispersion diameter.

Here, the dispersion diameter can be determined as follows: the form of dispersion is identified by observing a cross section of the film using a transmission electron microscope (TEM), scanning electron microscope (SEM), or the like; in cases where the form is a new circle, the diameter of the circle is regarded as the dispersion diameter; or in cases where the form of dispersion is a variant shape such as an ellipse or a spindle, the diameter of the circumcircle of the shape is regarded as the dispersion diameter.

From the viewpoint of comparatively decreasing the dispersion diameter of the ion-conducting hydrocarbon polymer in the A-layer, the content ratio of the non-ion-conducting fluorinated polymer in the A-layer is preferably 25 mass% or more and 75 mass% or less, preferably 30 mass% or more and 70 mass% or less, particularly preferably 35 mass% or more and 65 mass% or less, with respect to all the components (the total solid content) of the A-layer. In addition, from the above-mentioned viewpoints, the mass ratio of the ion-conducting fluorinated polymer to the non-ion-conducting fluorinated polymer in the A-layer is preferably in the range of from 25:75 to 55:45, more preferably in the range of from 30:70 to 50:50, particularly preferably in the range of from 35:65 to 45:55.

In addition, from the viewpoint of comparatively decreasing the dispersion diameter of the ion-conducting hydrocarbon polymer in the A-layer, the electrolyte membrane preferably has the lowest crystal melting peak (Tm) of less than 175°C as measured in a 3rd run by differential scanning calorimetry (DSC). The crystal melting peak (Tm) is more preferably less than 160°C, still more preferably less than 150°C, particularly preferably less than 140°C, most preferably less than 135°C. The details will be mentioned below.

In an electrolyte membrane according to the present invention, substantially no ion-conducting hydrocarbon polymer is preferably present in the outer side of the A-layer. Specifically, the electrolyte membrane preferably satisfies the following numerical formula (1), assuming that the thickness of the A-layer is (11), and that the shortest distance from the outer side of the A-layer to the hydrocarbon polymer in the A-layer is (t2).

$$(t1) - (t2) > 0 \ldots (1)$$

Here, that substantially no ion-conducting hydrocarbon polymer is present in the outer side of the A-layer means that no ion-conducting hydrocarbon polymer having a dispersion diameter of 0.1 $\mu$m or more is present. The above-mentioned (t2) is the shortest distance from the outer side up to any ion-conducting hydrocarbon polymer having a dispersion diameter of 0.1 $\mu$m or more.

Satisfying the numerical formula (1) means that no ion-conducting hydrocarbon polymer is present in the outer side of the A-layer, thus enabling the electrolyte membrane to be less prone to electrochemical oxidation and deterioration even in cases where the electrolyte membrane is in direct contact with a high-potential electrode, and enabling stable charge and discharge even in long-term use. Hence, such a condition is preferable. In addition, the relationship between (t1) and (t2) more preferably satisfies the following numerical formula (2). The relationship still more preferably satisfies the following numerical formula (3), most preferably satisfies the following numerical formula (4).

$$0.3 \times (t1) \leq (t2) \ldots (2)$$

$$0.5 \times (t1) \leq (t2) \ldots (3)$$

$$0.8 \times (t1) \leq (t2) \ldots (4)$$

That is, it is preferable that the dispersion of the ion-conducting hydrocarbon polymer in the A-layer is present at high density in the region on the side of the interface between the A-layer and the B-layer, and substantially not present in the outer side of the A-layer.

The aspects according to the numerical formulae (1) to (4) can be obtained, for example, by applying the coating liquid of the A-layer to the B-layer.

Additionally, as in the numerical formulae (2) to (4), the larger the ratio of t1 (the thickness of the A-layer) to t2 (the shortest distance from the outer side to the hydrocarbon polymer), the more preferable. The ratio can be controlled, for example, by adjusting the solvent for the coating liquid of the A-layer, the solid concentration of the coating liquid, the drying rate after coating, and the like. For example, allowing the solvent for the coating liquid of the A-layer to be the same kind of solvent as used to form a membrane as the B-layer makes it possible that comparatively increasing the solid concentration of the coating liquid or comparatively increasing the drying rate increases the above-mentioned ratio.

An electrolyte membrane according to the embodiment 2 of the present invention has the above-mentioned basic structure, and additionally is characterized by having the lowest crystal melting peak (Tm) of less than 175°C as measured in a 3rd run by differential scanning calorimetry (DSC). Using such an electrolyte membrane according to the present invention contributes to inhibiting the deterioration of the electrolyte membrane in long-time operation to enhance the durability.

An electrolyte membrane according to the present invention preferably has the lowest crystal melting peak (Tm) of less than 160°C, more preferably less than 150°C, still more preferably less than 140°C, most preferably less than 135°C, as measured in a 3rd run by differential scanning calorimetry (DSC). The lower limit of the crystal melting peak (Tm) is approximately 80°C. In the preferable range, the electrolyte membrane is inhibited from being deteriorated, and is increased in the durability.

The crystal melting peak (Tm) of the electrolyte membrane can be adjusted, for example, by using a crystalline fluorinated polymer as the non-ion-conducting fluorinated polymer to be contained in the A-layer, and by controlling the melting point of this crystalline fluorinated polymer. Specifically, a crystalline fluorinated polymer having a melting point of less than 175°C is preferable, a crystalline fluorinated polymer having a melting point of less than 150°C is more preferable, and a crystalline fluorinated polymer having a melting point of less than 135°C is particularly preferable. A crystalline fluorinated polymer having a lower melting point tends to more enhance the adhesiveness between the A-layer and the B-layer. Examples of crystalline fluorinated polymers that have a melting point of less than 175°C and can be preferably used include a copolymer of vinylidene fluoride and hexafluoropropylene, but the present invention is not limited thereto.

The electrolyte membrane having the crystal melting peak (Tm) of less than 175°C makes it easier that the ion-conducting hydrocarbon polymer is dispersed in the A-layer, and in addition, the above-mentioned crystal melting peak (Tm), if even lower, tends to decrease the dispersion diameter of the ion-conducting hydrocarbon polymer in the A-layer.

In the present invention, the A-layer preferably contain an ion-conducting fluorinated polymer and a non-ion-conducting fluorinated polymer as main components. That is, the total amount of the ion-conducting fluorinated polymer and the non-ion-conducting fluorinated polymer is preferably 60 mass% or more, more preferably 70 mass% or more, still more preferably 80 mass% or more, particularly preferably 90 mass% or more, with respect to all the components (the total solid content) of the A-layer. The upper limit is 100 mass%.

In addition, the ratio of the non-ion-conducting fluorinated polymer in the A-layer is more preferably 25 mass% or more, still more preferably 30 mass% or more, particularly preferably 35 mass%, with respect to all the components (the total solid content) of the A-layer. In addition, the ratio is preferably 75 mass% or less, more preferably 70 mass% or less, still more preferably 65 mass% or less. Enabling the non-ion-conducting polymer in the A-layer to be in the preferable range makes it possible to make the ion-conductivity in the A-layer sufficient, to prevent an increase in resistance in a redox-flow battery having the A-layer incorporated therein, and to obtain sufficient charge and discharge characteristics. In addition, such a condition makes it possible that the adhesiveness with the B-layer composed of an ion-conducting hydrocarbon polymer is sufficient, and that peeling or the like between the layers is inhibited during charge and discharge.

Additionally, as above-mentioned, the mass ratio of the ion-conducting fluorinated polymer to the non-ion-conducting fluorinated polymer in the A-layer is preferably in the range of from 25:75 to 55:45, more preferably in the range of from 30:70 to 50:50, particularly preferably in the range of from 35:65 to 45:55. Enabling the mass ratio of the ion-conducting polymer to the non-ion-conducting polymer in the A-layer to be in the preferable range makes it possible to make the ion-conductivity in the A-layer sufficient, to prevent an increase in resistance in a redox-flow battery having the A-layer incorporated therein, and to obtain sufficient charge and discharge characteristics. In addition, such a condition makes it possible that the adhesiveness with the layer composed of an ion-conducting hydrocarbon polymer is sufficient, and that swelling, peeling, or the like between the layers is inhibited during charge and discharge.

In the present invention, the amount of the ion-conducting hydrocarbon polymer contained in the B-layer is preferably 70 mass% or more, more preferably 80 mass% or more, particularly preferably 90 mass% or more, with respect to the total amount of the electrolyte component (ion-conducting polymer) contained in the B-layer. The upper limit is 100 mass%. In addition, the B-layer can contain a non-ion-conducting polymer, for example, a fluorinated polymer, hydrocarbon polymer, and/or the like. In this case, the amount of the nonionic polymer is preferably 30 parts by mass or less, more preferably 20 parts by mass or less, particularly preferably 10 parts by mass or less, with respect to 100 parts by mass of the ion-conducting hydrocarbon polymer.

The thickness of the A-layer is preferably 1 μm or more and 20 μm or less, more preferably 2 μm or more and 15 μm or less, particularly preferably 3 μm or more and 10 μm or less, from the viewpoints of high power efficiency and durability in long-term drive.

The thickness of the B-layer is preferably 10 μm or more and 300 μm or less, more preferably 20 μm or more and 200 μm or less, particularly preferably 30 μm or more and 100 μm or less, from the viewpoints of high power efficiency and durability in long-term drive.

The thickness of an electrolyte membrane according to the present invention is preferably 15 μm or more, more preferably 20 μm or more, still more preferably 25 μm or more, particularly preferably 30 μm or more, from the viewpoint of durability. On the other hand, the thickness is preferably 500 μm or less, more preferably 400 μm or less, still more preferably 300 μm or less, particularly preferably 200 μm or less, from the viewpoint of voltage efficiency. The thickness of the electrolyte membrane can be controlled on the basis of the concentration of the solution and the thickness of the coating on the support base material.

In an electrolyte membrane according to the present invention, the A-layer can be laminated on one face or both faces of the B-layer, but the A-layer is preferably laminated on only one face of the B-layer. Allowing the A-layer to be laminated on only one face of the B-layer makes it possible to keep the resistance of the electrolyte membrane low, and at the same time, enhance the durability.

For an electrolyte membrane according to the present invention, it is preferable that the active material permeation of an aqueous solution having a tetravalent-vanadium ion concentration of 1.5 $mol \cdot L^{-1}$ and a sulfuric acid concentration of 3.0 $mol \cdot L^{-1}$ is $1,800 \times 10^{-10}$ $cm^2/min$ or less per unit area of the electrolyte membrane. The amount is more preferably $800 \times 10^{-10}$ $cm^2/min$ or less, still more preferably $300 \times 10^{-10}$ $cm^2/min$ or less, particularly preferably $50 \times 10^{-10}$ $cm^2/min$ or less, most preferably $30 \times 10^{-10}$ $cm^2/min$ or less. In cases where the amount of permeation is within the preferable range, the active material in the cathode does not permeate (cross over to) the anode side, thus does not undergo self-discharge, does not decrease the current efficiency, and in addition, does not decrease the energy efficiency through repeated cycles of charge and discharge. In addition, the lower limit is subject to no particular limitation, and is preferably $1 \times 10^{-11}$ $cm^2/min$ or more from the viewpoint of ensuring the proton conductivity. In order to bring the amount of permeation of the active material within the above-mentioned range, an ion-conducting hydrocarbon polymer is preferably used in the B-layer, and the polymer more preferably contains a structural unit represented by the below-mentioned chemical formulae (1) and (2).

An electrolyte membrane according to the present invention preferably has a tensile modulus of 0.5 GPa or

more at 23°C and at 50% RH. The tensile modulus is more preferably 1.0 GPa or more, still more preferably 1.5 GPa or more. The membrane electrolyte having a tensile modulus within the above-mentioned preferable range exhibits good handleability when incorporated in a redox-flow battery. In addition, the tensile modulus is limited to no particular upper limit, and the upper limit is considered to be 10 GPa or less, considering the tensile modulus of a general polymer membrane. Here, in order to bring the tensile modulus to 0.5 GPa or more, an ion-conducting hydrocarbon polymer is preferably used in the B-layer, and the polymer more preferably contains a structural unit represented by the below-mentioned chemical formulae (1) and (2).

In an electrolyte membrane according to the present invention, the ion-conducting hydrocarbon polymer constituting the B-layer is preferably a hydrocarbon polymer having an aromatic ring in the main chain. Examples of hydrocarbon-based electrolyte membranes having an aromatic ring in the main chain of the polymer include polymers such as polysulfone, polyether sulfone, polyphenylene oxide, polyarylene ether polymers, polyphenylene sulfide, polyphenylene sulfide sulfone, polyparaphenylene, polyarylene polymers, polyarylene ketone, polyether ketone, polyarylene phosphine oxide, polyether phosphine oxide, polybenzoxazole, polybenzothiazole, polybenzimidazole, aromatic polyamide, polyimide, polyetherimide, and polyimidesulfone. Note that "polysulfone", "polyether sulfone", "polyether ketone", and the like referred to herein are generic terms for polymers having a sulfone bond, an ether bond, or a ketone bond in their molecular chains, encompass polyether ketone ketone, polyether ether ketone, polyether ether ketone ketone, polyether ketone ether ketone ketone, and polyether ketone sulfone, and are limited to no particular polymer structure.

Among these polymers, polymers such as polysulfone, polyether sulfone, polyphenylene oxide, polyarylene ether polymers, polyphenylene sulfide, polyphenylene sulfide sulfone, polyarylene ketone, polyether ketone, polyarylene phosphine oxide, and polyether phosphine oxide are more preferable from the viewpoints of mechanical strength, physical durability, processability, and hydrolysis resistance. Among these, aromatic polyether polymers are still more preferable from the viewpoints of mechanical strength, physical durability, and production cost. Aromatic polyether ketone (PEK) polymers are particularly preferable from the viewpoint of exhibiting crystallinity owing to the good packing property of the skeleton structure of the main chain and to the extremely strong intermolecular cohesive force, from the viewpoint of having the property of being not dissolved in a general solvent at all, and from the viewpoints of tensile strength elongation, tear strength, and fatigue resistance.

An aromatic polyether ketone (PEK) polymer exhibits crystallinity owing to the good packing property and the extremely strong intermolecular cohesive force, has the property of not being dissolved in a general solvent at all, and thus, is unsuitable for membrane formation based on use of a solution, but allowing the polymer to contain a protecting group to decrease the crystallinity of the PEK polymer makes it possible that the polymer is soluble in an organic solvent, resulting in a solution to be used for membrane formation. After the solution is molded in membrane form or other form, deprotecting part of the protecting groups in order to enhance the intermolecular cohesive force of the molecular chain of the polymer makes it possible to obtain an electrolyte membrane achieving a significant enhancement in the mechanical characteristics such as hot-water resistance, tensile strength elongation, tear strength, and fatigue resistance and active material blocking properties against vanadium, titanium, manganese, or the like. In cases where this production step is performed, particularly a polymer electrolyte membrane according to the present invention is characterized by making it possible to achieve high proton conductivity and in addition, to achieve membrane-forming ability (processability), production cost, hot-water resistance, active material blocking properties, and mechanical characteristics all together.

The ion-conducting hydrocarbon polymer in the present invention more preferably contains a structural unit represented by the below-mentioned chemical formulae (1) and (2).

[Chem. 5]

$$-O-Ar_1-O-Ar_2-O- \qquad (1)$$

[Chem. 6]

$$-O-Ar_1-O-Ar_3-O- \qquad (2)$$

Here, $Ar_1$ and $Ar_2$ are represented by the following chemical formula (3), $Ar_3$ is represented by the following chemical formula (4), and $X_1$ and $X_2$ independently represent a ketone group (-(C=O)-), ether group (-O-), sulfonic group ($-SO_2-$), or fluorocarbon-containing group ($-C(CF_3)_2-$), and may contain a plurality of the structures. In addition, $X_1$ may be a protecting group. Y represents an ionic group. $X_1$ and $X_2$ are each more preferably a ketone group or a fluorocarbon-containing group, particularly preferably a ketone group, from the viewpoints of the solubility in an organic solvent and the physical characteristics of the resulting membrane.

[Chem. 7]

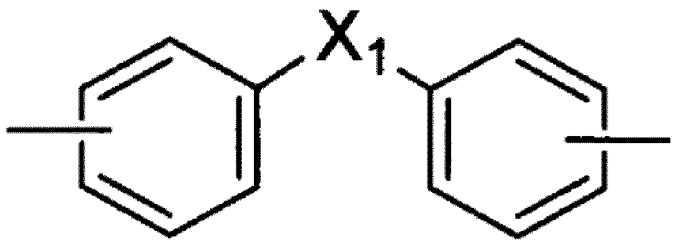

(3)

[Chem. 8]

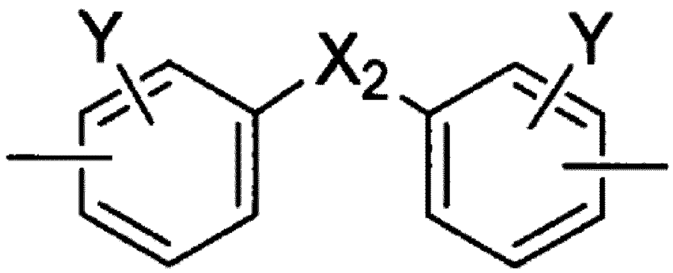

(4)

In this regard, the above-mentioned structure can be obtained by polycondensation between a divalent aromatic dihalide compound and a divalent bisphenol compound, and the amount of the structural unit can be changed in accordance with the quantitative ratios of these compounds to be fed. Here, Y (an ionic group) encompasses a structure formed into a salt. Examples of a cation that forms the salt include any metal cation, $NR_4^+$ (wherein R is any organic group), and the like. Such a metal cation can be used without any particular limitation to the valence or the like. The polymer can contain two or more of these ionic groups, the combination of which can be suitably determined in accordance with the polymer structure or the like. Above all, it is more preferable that the polymer contains at least a sulfonic group, a sulfonimide group, or a sulfate group from the viewpoint of high proton conductivity, and it is most preferable that the polymer contains at least a sulfonic group from the viewpoint of raw material cost. Examples of a method of introducing an ionic group into such an electrolyte polymer include a method of polymerization with a monomer having an ionic group and a method of introducing an ionic group by polymer reaction. In the present invention, a method of polymerization with a monomer having an ionic group is used.

Here, $X_1$ may be a protecting group as above-mentioned, and examples of protecting groups include a protecting group to be used generally in organic synthesis. The protecting group is a substituent that is temporarily introduced on the premise that the protecting group is removed in a subsequent stage. The protecting group protects a functional group having high reactivity, thus inactivates the functional group in a subsequent reaction, and can deprotect the resulting group after the reaction to restore the original functional group. That is, the protecting group and a functional group to be protected work in a pair. For example, a t-butyl group is used as a protecting group for a hydroxyl group in some cases, but in cases where the same t-butyl group is introduced into an alkylene chain, this t-butyl group is not called a protecting group. The reaction for introducing a protecting group is called protection (reaction), and the reaction for removing the protecting group is called deprotection (reaction).

Such a protection reaction is described in detail, for example, in Theodora W. Greene, Protective Groups in Organic Synthesis; John Wiley & Sons, Inc.; the U.S.A., 1981, and this can be preferably used. The reaction can be selected suitably, considering the following: the reactivity and yield of the protection reaction and the deprotection reaction; the stability of the state where the protecting group is contained; the production cost; and the like. In addition, the stage at which a protecting group is introduced in a polymerization reaction may be a monomer stage, an oligomer stage, or a polymer stage, and can be selected suitably.

Specific examples of protection reactions include; a method in which a ketone site is protected/deprotected with a ketal site; and a method in which a ketone site is protected/deprotected with a heteroatom analog, for example, thioketal, of a ketal site. These methods are described in Chapter 4 in the above-mentioned *Protective Groups in Organic Synthesis.* Additional examples include: a method in which protection and deprotection are performed between a sulfonic acid and a soluble ester derivative; a method in which protection and deprotection are performed by introducing a t-butyl group as a soluble group into an aromatic ring, and de-t-butylating the resulting ring with an acid; and the like. To enhance

the solubility in a general solvent, and to decrease the crystallinity, an aliphatic group, particularly an aliphatic group containing a cyclic portion is preferably used as a protecting group from the viewpoint of large steric hindrance.

The position of a functional group into which a protecting group is introduced is more preferably in the main chain of the polymer. The processability of a material for a polymer electrolyte membrane according to the present invention is enhanced by introducing a protecting group into the main chain portion of a polymer having a good packing property. Here, a functional group present in the main chain of a polymer is defined as a functional group that, when deleted, causes the polymer chain to be cut. This means, for example, that deleting a ketone group of an aromatic polyether ketone causes a benzene ring to be cut off from another benzene ring. More specific examples include a structure represented by the following chemical formulae (P1) to (P7). As with the structures illustrated here, using a divalent bisphenol compound as a monomer enables the compound to be introduced into the polymer chain. In this regard, such a structure can be considered to be a structure represented by $Ar_1$ in the above-mentioned chemical formulae (1) and (2) in cases where a bisphenol compound represented by the following chemical formula is used. In addition, it is not a problem that a ketal site is changed to a ketone group by deprotection in the material molded into a membrane.

[Chem. 9]

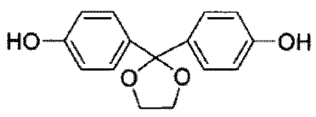

(P1)

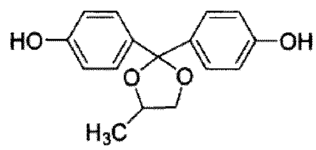

(P2)

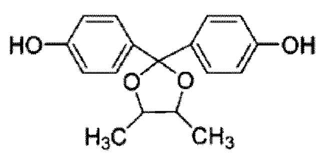

(P3)

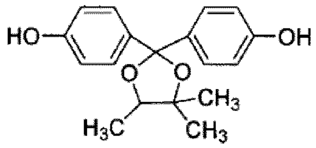

(P4)

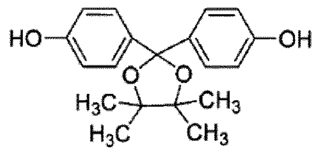

(P5)

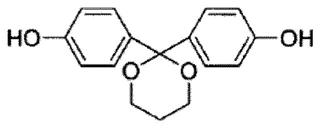

(P6)

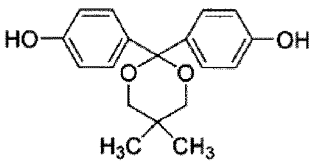

(P7)

Here, assuming that $Ar_2$ is a structure derived from a divalent aromatic dihalide compound, and that $Ar_3$ is a structure derived from an aromatic dihalide compound having an ionic group, such a compound as enumerated below can be used as each monomer.

Specific examples of aromatic dihalide compounds include 3,3'-disulfonate-4,4'-dichlorodiphenyl sulfone, 3,3'-disulfonate-4,4'-difluorodiphenyl sulfone, 3,3'-disulfonate-4,4'-dichlorodiphenyl ketone, 3,3'-disulfonate-4,4'-difluorodiphenyl ketone, 3,3'-disulfonate-4,4'-dichlorodiphenylphenylphosphine oxide, 3,3'-disulfonate-4,4'-difluorodiphenylphenylphosphine oxide, and the like. Among these, 3,3'-disulfonate-4,4'-dichlorodiphenyl ketone and 3,3'-disulfonate-4,4'-difluorodiphenyl ketone are more preferable from the viewpoints of production cost and the effect of inhibiting the permeation of an active material, and 3,3'-disulfonate-4,4'-difluorodiphenyl ketone is most preferable from the viewpoint of polymerization activity.

In addition, specific examples of aromatic dihalide compounds having an ionic group include 3,3'-disulfonate-4,4'-dichlorodiphenyl sulfone, 3,3'-disulfonate-4,4'-difluorodiphenyl sulfone, 3,3'-disulfonate-4,4'-dichlorodiphenyl ketone, 3,3'-disulfonate-4,4'-difluorodiphenyl ketone, 3,3'-disulfonate-4,4'-dichlorodiphenylphenylphosphine oxide, 3,3'-disulfonate-4,4'-difluorodiphenylphenylphosphine oxide, and the like. Among these, 3,3'-disulfonate-4,4'-dichlorodiphenyl ketone and 3,3'-disulfonate-4,4'-difluorodiphenyl ketone are more preferable as aromatic activated dihalide compounds from the viewpoints of production cost and the effect of inhibiting the permeation of an active material, and 3,3'-disulfonate-4,4'-difluorodiphenyl ketone is most preferable from the viewpoint of polymerization activity.

A method to be used preferably in the present invention to polymerize an aromatic polyether polymer is subject

to no particular limitation as long as the method enables the polymer to have a substantially sufficiently high molecular weight. For example, such a polymer can be synthesized by utilizing an aromatic nucleophilic substitution reaction between an aromatic dihalide compound and a divalent phenol compound. In addition, an aromatic nucleophilic substitution reaction of a halogenated aromatic phenol compound can be utilized to introduce a fifth component.

To obtain a material preferable for a polymer electrolyte membrane according to the present invention, the polymerization of an aromatic polyether polymer by an aromatic nucleophilic substitution reaction can be performed by allowing the above-mentioned monomer mixture to react in the presence of a basic compound. The polymerization can be performed in the temperature range of from 0 to 350°C, preferably at a temperature of 50 to 250°C. In cases where the polymerization temperature is within the preferable range, the reaction progresses sufficiently, and on the other hand, the polymer is not decomposed. The reaction can be performed in the presence of no solvent, but preferably performed in the presence of a solvent. Examples of solvents that can be used include: aprotic polar solvents such as *N*,*N*-dimethylacetoamide, *N*,*N*-dimethylformamide, *N*-methyl-2-pyrrolidone, dimethyl sulfoxide, sulfolane, 1,3-dimethyl-2-imidazolidinone, and hexamethylphosphon triamide. The solvent is not limited to these, and may be a solvent that can be used as a stable solvent in an aromatic nucleophilic substitution reaction. These organic solvents may be used singly or in mixture of two or more kinds thereof.

Examples of basic compounds include sodium hydroxide, potassium hydroxide, sodium carbonate, potassium carbonate, sodium hydrogencarbonate, potassium hydrogencarbonate, and the like. Without any limitation to these, a basic compound that makes it possible to form an aromatic diol into an active phenoxide structure can be used.

In an aromatic nucleophilic substitution reaction, water is generated as a byproduct in some cases. In this case, it is also possible that, independent of a polymerization solvent, toluene or the like is allowed to coexist in a reaction system to form an azeotrope, in the form of which water can be removed out of the system. In a method of removing water out of the system, a water absorbing agent such as a molecular sieve can be used. An azeotropic agent to be used to remove reaction water or water introduced in the reaction generally and substantially does not impede polymerization, and is any inactive compound that co-distills with water, and boils between approximately 25°C and approximately 250°C. Examples of ordinary azeotropic agents include benzene, toluene, xylene, chlorobenzene, methylene chloride, dichlorobenzene, trichlorobenzene, and the like. Obviously, it is useful to select an azeotropic agent having a boiling point lower than the boiling point of a bipolar solvent used. An azeotropic agent is usually used, but this is not always desired when a high reaction temperature, for example, a temperature of 200°C or more is used, particularly when inert gas is continuously sparged in a reaction mixture. In general, it is desirable that the reaction is performed with no oxygen present in the inert atmosphere.

In cases where the aromatic nucleophilic substitution reaction is induced in a solvent, it is preferable that the monomer is preliminarily prepared in such a manner that the concentration of the resulting polymer is 5 to 50 wt%. In cases where the polymer concentration is within the preferable range, the degree of polymerization is sufficiently increased. On the other hand, the viscosity of the reaction system is suitable, and the post-treatment of the reactant is easy.

Upon completion of the polymerization reaction, the solvent is removed from the reaction solution by evaporation, and the residue is washed, as needed. Thus, a desired polymer is obtained. In addition, the polymer can be obtained by the following: adding the reaction solution to a solvent in which the polymer has low solubility and in which the inorganic salt by produced has high solubility, to thereby remove the inorganic salt; precipitating the polymer as a solid; and collecting the precipitate by filtration. The polymer collected is optionally washed with water, alcohol, or another solvent, and dried. After a desired molecular weight is obtained, either a phenoxide for forming a stable end group or a halide end-capping agent can optionally be introduced into the halide or the phenoxide end group.

In the present invention, it is desired from the viewpoint of processability that a protecting group is introduced without deprotection by the time of a membrane-forming stage, and hence, it is desired that the polymerization and purification are performed, considering the conditions where the protecting group can be present stably. For example, in cases where a ketal is used as the protecting group, the deprotection reaction progresses if under an acidic condition, and thus, it is desired that the system is kept neutral or alkaline.

In the present invention, a method of deprotecting at least part of the ketone sites protected with ketals, and thus restoring the ketone sites is subject to no particular limitation. The deprotection reaction can be performed in the presence of water and acid under ununiform or uniform conditions, and from the viewpoints of mechanical strength and solvent resistance, a method in which the material is molded in membrane form or the like and then acid-treated is more preferable. Specifically, the membrane molded can be immersed in an aqueous hydrochloric acid solution to be deprotected, and the concentration of the acid and the temperature of the aqueous solution can be selected suitably.

The weight ratio of the acidic aqueous solution needed for the polymer is preferably 1 to 100, and it is possible to use an even larger amount of water. An acid catalyst is preferably used at a concentration of 0.1 to 50 wt% with respect to the water present. Examples of suitable acid catalysts include: strong mineral acids such as hydrochloric acid, nitric acid, fluorosulfonic acid, and sulfuric acid; and strong organic acids such as p-toluene sulfonic acid and trifluoromethanesulfonic acid. The acid catalyst, the amount of excess water, the reaction pressure, and the like can be selected suitably in accordance with the membrane thickness of the polymer and with the like.

For example, immersing the membrane in an acidic aqueous solution, for example, an aqueous solution of 6 N hydrochloric acid, and heating the membrane at 95°C for 1 to 48 hours makes it possible to deprotect substantially the whole amount of the protecting groups easily. In addition, even if the polymer is immersed in an aqueous solution of 1 N hydrochloric acid at 25°C for 24 hours, the majority of the protecting groups can be deprotected. However, the deprotection is not limited to these conditions, and the deprotection may be performed with acidic gas, organic acid, or the like, or the deprotection may be performed by heat treatment.

In general, when a high-potential electrode and a hydrocarbon polymer come in direct contact, the polymer may undesirably be oxidized electrochemically and deteriorated. In particular, the electrode on the cathode side has a high potential, and thus, when an electrolyte membrane according to the present invention is incorporated in a redox-flow battery, the A-layer composed of an ion-conducting fluorinated polymer and a non-ion-conducting fluorinated polymer is disposed toward the cathode side, thus making it possible to inhibit the deterioration effectively. Hence, such a disposition is preferable. In addition, the A-layer can be identified by acquiring spectra of the front side and back side of an electrolyte membrane by an FT-IR ATR method, and verifying whether a peak intensity derived from the ion-conducting fluorinated polymer or the non-ion-conducting fluorinated polymer is different between the front side and the back side. The A-layer can also be identified as follows: a section is made in the thickness direction of an electrolyte membrane; an elemental analysis is made of the amounts of fluorine on the surface of the membrane and inside of the membrane by EDX from an image of the cross section observed using a transmission electron microscope (TEM) or a scanning electron microscope (SEM); and whether the fluorine atom concentration is different between the surface and central portion of the membrane is verified.

In addition, to an electrolyte membrane according to the present invention, an additive to be used for an ordinary polymer compound, such as a crystallization nucleating agent, plasticizer, stabilizer, mold release agent, or antioxidant, can be added to the extent that is not contrary to an object of the present invention.

In addition, for the purpose of enhancing the mechanical strength, thermal stability, processability, and the like, an electrolyte membrane according to the present invention may contain any kind of polymer, elastomer, filler, microparticle, additive, and/or the like to the extent that does not adversely affect the various characteristics mentioned earlier. In addition, the electrolyte membrane may be reinforced with a microporous membrane, nonwoven fabric, mesh, or the like.

The amount of a sulfonic group in the electrolyte membrane can be represented by a value of the sulfonic group density (mmol/g). The sulfonic group density in an electrolyte membrane in the present invention is preferably 1.0 to 3.0 mmol/g from the viewpoints of proton conductivity, active material blocking properties, and mechanical strength, more preferably to 1.1 to 2.5 mmol/g from the viewpoint of active material blocking properties, still more preferably 1.2 to 2.0 mmol/g. Bringing the sulfonic group density within the preferable range makes it possible to obtain high proton conductivity and sufficient voltage efficiency, and on the other hand, to obtain sufficient mechanical strength when the polymer is hydrous in cases where the polymer is used as an electrolyte membrane for a redox-flow battery.

Here, the sulfonic group density is the number of moles of the sulfonic groups introduced per 1 g of the polymer electrolyte material dried. A larger value as the number represents a larger amount of the sulfonic groups. The sulfonic group density can be determined by elemental analysis or neutralization titration. Among these, using an elemental analysis method to calculate from an S/C ratio is preferable because of the easiness of measurement. For example, in cases where the polymer contains a sulfur source other than a sulfonic group, the ion exchange capacity can be determined by a neutralization titration method. An electrolyte membrane according to the present invention encompasses an aspect that is a composite composed of a polymer having an ionic group and of a component other than the polymer, as below-mentioned. Also in this case, the sulfonic group density is determined using the whole amount of the composite as a criterion.

An electrolyte membrane according to the present invention may contain another component, for example, an inactive polymer having no electroconductivity nor ion-conductivity, or may contain an organic or inorganic compound, to the extent that does not defeat an object of the present invention.

In an electrolyte membrane according to the present invention, the amount of groups having a protecting group is subject to no particular limitation. From the viewpoints of mechanical characteristics, active material blocking properties, and chemical stability, the groups having a protecting group are preferably contained in a smaller amount, and most preferably wholly deprotected. The amount of the protecting groups can be measured by nuclear magnetic resonance spectrum (NMR), thermogravimetric analysis (TGA), generated gas analysis by temperature programmed desorption-mass spectrometry (TPD-MS), pyrolysis gas chromatograph, pyrolysis GC-MS, infrared absorption spectrum (IR), or the like. In cases where the electrolyte membrane contains a large amount of protecting groups, the electrolyte membrane is soluble in a solvent, and thus, a nuclear magnetic resonance spectrum (NMR) is suitable to quantitate the protecting groups. However, in cases where the protecting groups are solvent-insoluble in a very small amount, there are some cases where the protecting groups are difficult to quantitate accurately by NMR. In such a case, generated gas analysis by temperature programmed desorption-mass spectrometry (TPD-MS), pyrolysis gas chromatograph, or pyrolysis GC-MS is a suitable quantitation method.

An electrolyte membrane according to the present invention means a molded product containing an electrolyte material according to the present invention. In the present invention, specific examples of the shape of the molded product include membranes (including films, sheets, and film-like forms), plates, fibers, hollow fibers, particles, lumps, micropores, coatings, foams, and the like. The shape to be taken can be different depending on the usage. These shapes make it possible to enhance the design freedom of a polymer and enhance various characteristics such as mechanical characteristics and solvent resistance, and thus, can be used in a wide range of usage. This suitably applies particularly when a molded product of the polymer electrolyte is a membrane.

The weight-average molecular weight of the ion-conducting hydrocarbon polymer constituting an electrolyte membrane according to the present invention is preferably 300,000 or more. Bringing the weight-average molecular weight of the polymer constituting an electrolyte membrane according to the present invention within the above-mentioned preferable range makes it difficult to generate cracks in the molded membrane, and affords sufficient mechanical strength and good chemical stability. The weight-average molecular weight of the polymer constituting an electrolyte membrane according to the present invention is more preferably 350,000 or more, still more preferably 400,000 or more, particularly preferably 500,000 or more. On the other hand, the weight-average molecular weight is limited to no particular upper limit, but the weight-average molecular weight of 5,000,000 or less affords sufficient solubility, suitable solution viscosity, and good processability. The weight-average molecular weight Mw used here refers to a relative weight-average molecular weight with respect to the molecular weight of standard polystyrene, as determined by gel permeation chromatography using an NMP solvent (NMP solvent containing 10 mmol/L lithium bromide) as a mobile phase.

In this regard, the chemical structure of the polymer constituting an electrolyte membrane according to the present invention can be verified from an S=O absorption of 1,030 to 1,045 $cm^{-1}$ and 1,160 to 1,190 cm-1, a C-O-C absorption of 1,130 to 1,250 $cm^{-1}$, a C=O absorption of 1,640 to 1,660 $cm^{-1}$, and the like in an infrared absorption spectrum. The composition ratios of these moieties can be known by neutralization titration of a sulfonic group or by elemental analysis. In addition, the structure can be verified with a nuclear magnetic resonance spectrum ($^1$H-NMR), for example, from the peak of an aromatic proton at 6.8 to 8.0 ppm. In addition, where and how a sulfonic group is arranged can be verified by solution $^{13}$C-NMR or solid $^{13}$C-NMR.

In some cases, an electrolyte membrane according to the present invention is insoluble in a general organic solvent, for example, deuterated dimethyl sulfoxide or deuterated chloroform, but can be measured using deuterated sulfuric acid. This makes it possible to ascertain whether the polymer has undergone sulfonation at a monomer stage and sulfonation position control, or whether the polymer is a post-sulfonated polymer that has not undergone sulfonation position control. However, in cases where an electron-withdrawing group such as a ketone group or a sulfone group is not adjacent, sulfonation reaction progresses during sample preparation and measurement, and thus, it is difficult to predicate the accurate sulfonation position of the sample.

The ion-conducting hydrocarbon polymer to be used as an electrolyte material in the B-layer may be a block copolymer or a random copolymer, and is preferably a random copolymer. Using a random copolymer as an ion-conducting hydrocarbon polymer constituting the B-layer makes it possible to inhibit the permeation of vanadium ions. In addition, a random copolymer tends to have a smaller dispersion diameter in the A-layer than a block copolymer, and thus, is preferable.

For the ion-conducting hydrocarbon polymer to be used in the B-layer, for example, (i) it is preferable that the polymer contains a structural unit represented by the above-mentioned chemical formulae (1) and (2), (ii) it is more preferable that $X_1$ and $X_2$ in the above-mentioned chemical formula (3) and chemical formula (4) are each a ketone group, (iii) it is still more preferable that the polymer is a random copolymer of the above-mentioned chemical formulae (1) and (2), and (iv) it is particularly preferable that the polymer is a random copolymer having a weight-average molecular weight of 300,000 or more.

An electrolyte membrane according to the present invention is characterized in that, after the electrolyte membrane is molded, at least part of the protecting groups contained in the molded product are deprotected. A method of converting the polymer to a membrane is subject to no particular limitation. A possible method is a method in which a membrane is formed from a solution at a stage where the polymer has a protecting group such as a ketal; a method in which a membrane is formed from the molten polymer; and the like. The former method is, for example, a method in which the polymer electrolyte material is dissolved in a solvent such as NMP, the resulting solution is applied by cast coating to a support base material, for example, a PET film or a glass plate, and the solvent is removed to give a membrane.

A solvent to be used to form a membrane is desirably a solvent that can dissolve a polymer electrolyte material, and then removed. Examples of solvents to be used suitably include: aprotic polar solvents such as DMAc, DMF, NMP, DMSO, sulfolane, 1,3-dimethyl-2-imidazolidinone, and hexamethylphosphon triamide; ester solvents such as γ-butyrolactone and butyl acetate; carbonate solvents such as ethylene carbonate and propylene carbonate; alkylene glycol monoalkyl ethers such as ethylene glycol monomethyl ether, ethylene glycol monoethyl ether, propylene glycol monomethyl ether, and propylene glycol monoethyl ether; alcohol solvents such as isopropanol; water; and mixtures thereof. Aprotic polar solvents have the highest solubility, and are preferable.

A method in which a polymer solution prepared so as to have a desired solid concentration is filtrated by normal

pressure filtration, pressure filtration, or the like to remove foreign matter from the polymer electrolyte solution is preferable to afford a tough membrane. A filter medium to be used here is subject to no particular limitation, and is suitably a glass filter or a metallic filter. In the filtration, the minimum pore diameter that allows the polymer solution to pass through the filter is preferably 1 μm or less. Such filtration allows no foreign matter to leak in, prevents the membrane from being broken, and affords sufficient durability.

Then, the resulting polymer electrolyte membrane is preferably heat-treated after at least part of the ionic groups are brought into a metal salt state. In cases where a polymer electrolyte material to be used is a material that is polymerized in a metal salt state during polymerization, the material is preferably directly formed into a membrane and heat-treated. The metal of the metal salt is preferably a metal that can form a sulfonic acid and a salt. From the viewpoint of the price and environmental burden, the metal is preferably Li, Na, K, Rb, Cs, Mg, Ca, Sr, Ba, Ti, V, Mn, Fe, Co, Ni, Cu, Zn, Zr, Mo, W, or the like. Among these, Li, Na, K, Ca, Sr, and Ba are more preferable. Li, Na, and K are still more preferable. The temperature for this heat treatment is preferably 150 to 550°C, more preferably 160 to 400°C, particularly preferably 180 to 350°C.

The heat-treatment time is preferably 10 seconds to 12 hours, more preferably 30 seconds to 6 hours, particularly preferably 1 minute to 1 hour. The heat-treatment temperature within the preferable range makes it possible that the effect of inhibiting the permeation of an active material, the elastic modulus, and the breaking strength are sufficient. On the other hand, the temperature enables the membrane material to be less prone to deterioration. The heat-treatment time within the preferable range makes it possible that the effect of the heat-treatment is sufficient. On the other hand, the time enables the membrane material to be less prone to deterioration. The polymer electrolyte membrane obtained by heat treatment can be immersed in an acidic aqueous solution, as needed, so as to undergo proton exchange. Using this method of molding makes it possible that the polymer electrolyte membrane according to the present invention achieves all of proton conductivity, active material blocking properties, mechanical characteristics, and long-term durability in a better-balanced manner.

An electrolyte membrane according to the present invention involves the following: a polymer solution constituted by an aromatic polyether ketone polymer is molded in membrane form by the above-mentioned method, and then, at least part of the ketone sites protected with ketals are deprotected to give ketone sites. This method makes it possible to form a membrane from a solution of a polymer having a smaller amount of a sulfonic group and lacking in solubility, and makes it possible to achieve both of the proton conductivity and the active material blocking effect, and to achieve excellent mechanical characteristics and excellent dimensional stability.

In the present invention, a method in which part or all of the ketone sites protected with ketals are deprotected to give ketone sites is subject to no particular limitation. Examples of such a method include a method in which molding is followed by acid treatment. Specifically, the ketone sites protected can be deprotected by immersing the membrane molding in an aqueous solution of hydrochloric acid or sulfuric acid. The concentration of the acid and the temperature of the aqueous solution can be selected suitably, considering, for example, the ease of penetrating into the molded product. For example, immersing the polymer in an acidic aqueous solution, for example, an aqueous solution of 6 N hydrochloric acid, and heating the resulting polymer at 95°C for 8 hours makes it possible to deprotect the ketone site easily. However, the deprotection is not limited to these conditions, and the deprotection may be performed by heat-treatment or with acidic gas, organic acid, or the like.

An electrolyte membrane according to the present invention is a laminate membrane constituted by at least the following: an A-layer composed of an ion-conducting fluorinated polymer and a non-ion-conducting fluorinated polymer; and a B-layer composed of an ion-conducting hydrocarbon polymer. A method of producing the electrolyte membrane is subject to no particular limitation. Examples of such a method include a method in which an A-layer is formed on a B-layer composed of an ion-conducting hydrocarbon polymer and formed by a method described above. A solvent to be used to coat the A-layer is preferably the same as the above-mentioned solvent to be used to form the B-layer composed of an ion-conducting hydrocarbon polymer. Examples of a method that can be used to apply the A-layer and the B-layer by cast coating includes techniques such as knife coating, direct roll coating, Meyer bar coating, gravure coating, reverse coating, air knife coating, spray coating, brush coating, dip coating, die coating, vacuum die coating, curtain coating, flow coating, spin coating, screen printing, and inkjet coating. In addition, the concentration of the salt-like polymer electrolyte solution to be used is preferably 3 to 40 mass%, more preferably 5 to 30 mass%. In cases where the viscosity of the solution is within the preferable range, the solution has good retentivity and is less prone to cause a liquid flow, and on the other hand, the surface smoothness of the electrolyte membrane is good.

The electrolyte membrane according to the present invention can be used in various uses. For example, the electrolyte membrane can be used in medical uses such as extracorporeal circulation columns and artificial skin, filtration uses, ionexchange resin uses, various structural material uses, and electrochemical uses. In addition, the electrolyte membrane is suitable as artificial muscle. Above all, the electrolyte membrane can be more preferably used in various electrochemical uses. Examples of electrochemical uses include fuel cells, redox-flow batteries, water electrolysis apparatuses, electrochemical hydrogen compressors, chloralkali electrolysis apparatuses, and the like. Among these, redox-flow batteries are most preferable.

A redox-flow battery according to the present embodiment includes an electrolytic bath containing: a cathode cell containing a cathode composed of a carbon electrode; an anode cell containing an anode composed of a carbon electrode; and an electrolyte membrane as a barrier membrane for isolating and separating the cathode cell and the anode cell. The cathode cell contains a cathode electrolyte solution containing an active material, and the anode cell contains an anode electrolyte solution containing an active material. The cathode electrolyte solution and the anode electrolyte solution that contain an active material is, for example, stored in a cathode electrolyte solution tank and an anode electrolyte solution tank respectively, and supplied to the respective cells with a pump or the like.

A redox-flow battery according to the present embodiment can have a structure in which liquid-permeable porous carbon electrodes (for the anode and the cathode) are each disposed on each side of the barrier membrane, and sandwiched by pressing, and in which one space partitioned off by the barrier membrane is a cathode cell, the other is an anode cell, and the thickness of each cell is secured by a spacer. When sandwiched by pressing, the porous carbon electrodes are compressed, and at the same time, the electrolyte membrane is deformed, thus increasing the area of contact with the electrodes, making it possible to facilitate the migration of the active material and electrons flowing on the electrodes and the migration of protons, and thus enhance the voltage efficiency. As a porous carbon material, any known electrode can be used. Examples of the material include materials containing carbon fiber as a main material, and such a material is, for example, nonwoven fabric (carbon felt) or paper. Use of a carbon felt-made electrode offers the following effects: (1) in cases where an aqueous solution is used as an electrolyte solution, oxygen gas is less likely to be generated even when the electrical potential is such as to generate oxygen during charge, (2) the surface area is large, and (3) the electrolyte solution flowability is excellent. Among others, a combination of nonwoven fabric (carbon felt) and an electrolyte membrane according to the present invention is preferable to enhance the above-mentioned voltage efficiency. In addition, the compression ratio of the carbon material is preferably 20% or more and less than 70%.

In a vanadium type redox-flow battery, a cathode electrolyte solution composed of a sulfuric acid electrolyte solution containing tetravalent vanadium ($V^{4+}$) and pentavalent vanadium ($V^{5+}$) flows through the cathode cell, and an anode electrolyte solution containing trivalent vanadium ($V^{3+}$) and divalent vanadium ($V^{2+}$) flows through the anode cell, whereby the battery is charged and discharged. In the cathode cell during this charge, the vanadium ions release electrons, thus causing $V^{4+}$ to be oxidized to $V^{5+}$, and in the anode cell, the electrons returned through an external path cause $V^{3+}$ to be reduced to $V^{2+}$. In this oxidation-reduction reaction, the cathode cell contains an excess of protons ($H^+$), and the barrier membrane allows the excess of protons in the cathode cell to migrate selectively into the anode cell, thus maintaining the electrical neutrality. During discharge, this reaction progresses reversely. The electricity storage performance of a redox-flow battery during charge and discharge can be judged on the basis of energy efficiency. In a redox-flow battery including a membrane that affords both low internal resistance and the effect of inhibiting the permeation of an active material, the electric charge stored in the active material is taken out without waste, the internal resistance loss per unit amount of electric charge is inhibited, and thus, the final electricity storage performance (energy efficiency) of the battery is enhanced. During the operation of a redox-flow battery, the active material passes through the barrier membrane, and the ions the valence of which is changed by charge can no more contribute to discharge, thus decreasing the current efficiency (power efficiency). Using a barrier membrane according to the present embodiment for a redox-flow battery contributes to inhibiting the permeation of the active material, thus enabling the battery to be operated with high current efficiency (power efficiency).

On the other hand, the internal resistance of a redox-flow battery depends on the proton permeability of the membrane, and using a membrane having high proton permeability leads to decreasing the internal resistance of the battery. Decreasing the internal resistance allows the necessary voltage to decrease during charge, enabling the battery to be operated at a higher voltage during discharge. As above-mentioned, a barrier membrane according to the present embodiment for a redox-flow battery keeps the internal resistance low, and at the same time, achieves high current efficiency (high power efficiency) by virtue of inhibiting the permeation of the active material, so that the resulting final redox-flow battery has high energy efficiency.

## EXAMPLES

Hereinafter, the present invention will be more specifically described with reference to Examples, but the present invention is not limited to these examples. Measurement conditions for the properties are as below-mentioned. In addition, chemical structural formulae are inserted in the present Examples. The chemical structural formulae are inserted in order to help the readers' understanding, and do not always accurately represent the chemical structures, accurate compositions, and arrangements of the polymerization components of a polymer and the position, number, molecular weight, and the like of a sulfonic group. The materials are not limited to these chemical structural formulae.

### (1) Nuclear magnetic resonance spectrum (NMR)

A measurement was made by $^1H$-NMR under the following measurement conditions to verify the structure.

Device: EX-270 manufactured by JEOL Ltd.
Resonance frequency: 270 MHz ($^1$H-NMR)
Measurement temperature: room temperature
Dissolution solvent: DMSO-d6
Internal standard material: TMS (0 ppm)
Number of scans to accumulate: 16

(2) Weight-average molecular weight

The weight-average molecular weight of a polymer was measured by GPC. Using an HLC-8022GPC manufactured by Tosoh Corporation as an integrated device of an ultraviolet detector and a differential refractometer, and using, as GPC columns, two TSKgel SuperHM-H columns (having an inner diameter of 6.0 mm and a length of 15 cm) manufactured by Tosoh Corporation, the measurement was performed with an NMP solvent (NMP solvent containing 10 mmol/L lithium bromide) at a sample concentration of 0.1 wt%, at a flow rate of 0.2 mL/min, and at a temperature of 40°C, and the weight-average molecular weight was determined in terms of standard polystyrene.

(3) Method of measuring purity

A quantitative analysis was performed by gas chromatography (GC) under the following conditions.

Column: DB-5 (manufactured by Agilent Technologies, Inc.); L, 30 m; diameter, 0.53 mm; D, 1.50 μm
Carrier: helium (line speed, 35.0 cm/second)
The analysis conditions are as below-mentioned.
Inj. temp.: 300°C
Detct. temp.: 320°C
Oven: 50°C × 1 minute
Rate: 10°C/minute
Final: 300°C × 15 minutes
SP ratio: 50:1

(4) Dispersion diameter and thicknesses of A-layer and B-layer

An electrolyte membrane was cut in the perpendicular direction, and subjected to cryo-ultramicrotomy to make a cross-sectional sample. To make the contrast of an image clear, the sample may be stained with osmium acid, ruthenium acid, phosphotungstic acid, or the like. The cut face was observed using a transmission electron microscope (TEM, an HT7700 manufactured by Hitachi, Ltd.) under conditions based on an accelerating voltage of 200 kV. The photograph obtained was taken in image form into an image analyzer (Leica Application Suite LAS ver4.6 made by Leica Microsystems GmbH), the circumcircle of each dispersion portion having a dispersion diameter of 0.1 μm or more was determined, and the number-average diameter of the values determined was regarded as the dispersion diameter. In cases where it was not possible to judge whether a dispersion portion is a hydrocarbon polymer, a mapping analysis of a fluorine element was performed by EDX, and a dispersion portion from which no fluorine atom was detected was regarded as a hydrocarbon polymer. Then, the thickness of each of five places of each of the A-layer and the B-layer was measured by the same method as above-mentioned, and the values obtained was averaged.

(5) Distance (t2) from outer side of A-layer to hydrocarbon polymer in A-layer

From the results observed by TEM-EDX as above-mentioned, a distance from the outer side of the A-layer to a hydrocarbon polymer portion (having a dispersion diameter of 0.1 μm or more) in the A-layer was identified at five places, and the smallest value was adopted. Then, whether the thickness (t1) of the A-layer and (t2) satisfy the following numerical formula was verified. A result that satisfies the following numerical formula is denoted by ◦ in Table 1.

$$(t1) - (t2) > 0 \ldots (1)$$

(6) Crystal melting peak temperature (Tm)

The electrolyte membrane was measured by the following procedures in accordance with JIS K 7121 (1987)

and JIS K 7122 (1987) using a measurement device, a differential scanning calorimetry device "Temperature Modulated DSC7000X" manufactured by Hitachi High-Tech Corporation, and using a disc session "SSC/5200" for data analysis. The lowest crystal melting peak temperature in the 3rd run result obtained was adopted as the value.

Amount of sample: 10 mg
Heating rate and cooling rate: 10°C/min
Measurement mode: ramp mode
Measurement program:

1st run: 25°C to 120°C, held 60 minutes
2nd run: 120°C to 25°C, held 10 minutes
3rd run: 25°C to 210°C, held 0 minute
4th run: 210°C to 25°C, held 10 minutes

(7) Amount of permeation of tetravalent vanadium ions

An electrolyte membrane (6.6 $cm^2$) was sandwiched between H type cells. An aqueous solution of 1.5 $mol \cdot L^{-1}$ magnesium sulfate/3.5 $mol \cdot L^{-1}$ sulfuric acid and an aqueous solution of 1.5 $mol \cdot L^{-1}$ vanadium sulfate (IV)/3.5 $mol \cdot L^{-1}$ sulfuric acid, 70 mL each, were added in one and the other of the cells respectively. The resulting mixture was stirred at 25°C and at 300 rpm, using a magnetic stirrer. The concentration of the tetravalent vanadium ions eluted into the magnesium sulfate solution 4 days later was measured as an absorbance at 765 nm using a UV spectrometer (U-3010, manufactured by Hitachi, Ltd.).

Aqueous 3.5 $mol \cdot L^{-1}$ sulfuric acid solutions of vanadium sulfate (IV) having different concentrations were prepared preliminarily, and measured for absorbances with a UV spectral altimeter to prepare a calibration curve from the resulting relationship between the concentrations and the absorbances. From this calibration curve, the concentration of the tetravalent vanadium ions that permeated was quantitated.

Then, the amount of permeation of the tetravalent vanadium ions was calculated in accordance with the below-mentioned numerical formula. Here, the specific gravity (density) of the aqueous sulfuric acid solution used was regarded as the same as that of water.

$$\text{Amount of permeation of tetravalent vanadium ions } (\times 10^{-10}\ \text{cm}^2/\text{minute}) = \text{concentration of vanadium ions that permeated (mol)}/(\text{membrane area (cm}^2) \times \text{permeation time (minute))} / 1.5\ (\times 10^{-3}\ \text{mol/cm}^3) \times \text{membrane thickness (cm)}$$

(8) Tensile test (Young's modulus, elongation at break, and strength at break)

Tensile measurements were made under the below-mentioned conditions, and the averages of the values measured in tests at n = 5 were regarded as Young's modulus, elongation at break, and stress at break.

Measurement device: Autograph AG-IS (manufactured by Shimadzu Corporation)
Load: 100 N
Tension rate: 10 mm/min
Test piece: 10 mm wide × 50 mm long
Distance between samples: 30 mm
Testing environment: 23°C, 50% RH
Number of tests: n = 5

(9) Dimensional change rate

A composite electrolyte membrane was cut into a square piece of about 5 cm × about 5 cm, and left to stand for 24 hours in a temperature- and humidity-controlled atmosphere having a temperature of 23°C ± 5°C and a humidity of 50% ± 5%, and then the length in the machine direction (MD) and the length in the direction (TD) perpendicular to the machine direction, (MD1 and TD1), were measured with a caliper. The electrolyte membrane was immersed in hot water at 80°C for 8 hours, then the MD length and the TD length (MD2 and TD2) were measured again with a caliper,

and the dimensional change rates of the MD and the TD in the plane directions (λMD and λTD) and the dimensional change rate of the electrolyte membrane in the plane direction (λxy) (%) were calculated by the following numerical formulae.

$$\lambda MD = (MD2 - MD1) / MD1 \times 100$$

$$\lambda TD = (TD2 - TD1) / TD1 \times 100$$

$$\lambda xy = (\lambda MD + \lambda TD) / 2$$

(10) Ion exchange capacity (IEC)

An electrolyte membrane was subjected to proton exchange and thoroughly washed with pure water, and water on the membrane surface was wiped off. Then, the electrolyte membrane was vacuum-dried at 100°C for 12 hours or more, and the dry weight of the membrane was obtained. Next, to the electrolyte, 50 mL of an aqueous solution of 5 wt% sodium sulfate was added, and the electrolyte membrane was left to stand for 12 hours for ion exchange. Subsequently, the sulfuric acid generated was titrated using an aqueous solution of 0.01 mol/L sodium hydroxide. A commercially available 0.1 w/v% phenolphthalein solution for titration was added as an indicator, and the point at which the solution turned pale red-purple was taken as the end point. Finally, the ion exchange capacity was calculated in accordance with the below-mentioned numerical formula.

Ion exchange capacity (meq/g) = [concentration (mmol/mL) of aqueous sodium hydroxide solution × dropping amount (mL) of aqueous sodium hydroxide solution]/dry weight (g) of sample

(11) Charge and discharge test of redox-flow battery

Each of the electrolyte membranes produced in Examples and Comparative Examples was tested in a charge and discharge test as below-mentioned.

The electrolyte membrane was sandwiched between two carbon electrode materials composed of carbon felt (having a thickness of 3.0 mm) to fabricate an evaluation cell. This evaluation cell is a small cell having an effective electrode area of 50 $cm^2$, and has piping for supplying an electrolyte solution to each electrode. Through the piping provided in the cell, the electrolyte solution for each electrode is supplied to each carbon electrode material constituting each electrode, and passes through the pores in this carbon electrode material.

The performance of the electrolyte membrane was tested by repeating charge and discharge at a constant current density. The current density during the charge and discharge was set at 80 $mA/cm^2$. The upper limit voltage during the charge was set at 1.55 V, and the lower limit voltage during the discharge was set at 1.0 V. An aqueous 4.3 mol/L sulfuric acid solution of 1.7 mol/L vanadium sulfate was used as the cathode electrolyte solution, and an aqueous 4.3 mol/L sulfuric acid solution of 1.7 mol/L vanadium sulfate was used as the anode electrolyte solution. The amount of the electrolyte solution was 50 mL for each of the cathode and the anode. The flow rate of the liquid was 40 mL/min, and the test was performed through 1,000 cycles at 35°C in a thermostatic chamber. However, the discharge capacity in the first cycle was regarded as a reference. When the capacity decreased by 30%, the electrolyte solution was taken out of the tank and exchanged for a new electrolyte solution, and the test was continued.

Here in the charge and discharge test, the current density per the area of the electrode was set at 80 $mA/cm^2$ (4,000 mA), the quantity of electricity used for charge up to 1.55 V was regarded as Q1 coulombs, and the quantity of electricity taken out by constant current discharge up to 1.0 V was regarded as Q2 coulombs. In addition, the quantity of electricity used for charge up to 1.55 V was regarded as W1, and the quantity of electricity taken out by constant current discharge up to 1.0 V was regarded as W2.

Then, using these Q1, Q2, W1, and W2, the current efficiency, power efficiency, and voltage efficiency in the 5th cycle were determined as the initial performance on the basis of the below-mentioned numerical formula. In addition,

the power efficiency after 1,000 cycles (VE1000) was determined in the same manner, and the rate of decrease from the initial power efficiency (VE) was calculated in accordance with the below-mentioned numerical formula.

$$\text{Current efficiency (CE)} = \text{Q2} \times 100 / \text{Q1}$$

$$\text{Power efficiency (VE)} = \text{W2} \times 100 / \text{W1}$$

$$\text{Voltage efficiency (EE)} = \text{power efficiency} / \text{current efficiency}$$

$$\text{Decrease rate of power efficiency (\%)} = \{(\text{VE} - \text{VE1000}) / \text{VE}\} \times 100$$

(12) Durability

The charge and discharge test of the redox-flow battery was performed through 800 cycles and 1,000 cycles, and then, the cell was disassembled. The appearance of the electrolyte membrane was observed and rated in five steps on the basis of the below-mentioned criteria. A is the best, B and C are good, D is a tolerable level, and E is an additive level. The details are as follows.

A: no change was observed after 1,000 cycles.
B: no change was observed after 800 cycles, but a slight degree of swelling or peeling was observed after 1,000 cycles.
C: no change was observed after 800 cycles, but a low degree of swelling or peeling was observed after 1,000 cycles.
D: a low degree of swelling or peeling was observed after 800 cycles, but no whitening was observed after 1,000 cycles.
E: a low degree of whitening was observed after 800 cycles, but a high degree of whitening was observed after 1,000 cycles. (The progress of the deterioration of the ion-conducting hydrocarbon polymer in the electrolyte membrane causes whitening, and decreases the power efficiency rapidly.)

(13) Non-ion-conducting fluorinated polymer

The following polyvinylidene fluoride (a homopolymer or a copolymer) was used as the non-ion-conducting fluorinated polymer.

- PVDF2751: "Kynar" (registered trademark) 2751, a copolymer of vinylidene fluoride and hexafluoropropylene, manufactured by Arkema K.K.
- PVDF21510: "Solef' (registered trademark) 21510, a copolymer of vinylidene fluoride and hexafluoropropylene, manufactured by Solvay S.A.
- PVDF7300: "Kureha KF polymer" (registered trademark) #7300, a vinylidene fluoride homopolymer, manufactured by Kureha Corporation (14) Ion-conducting hydrocarbon polymer
- "Nafion" (registered trademark) D2020 (manufactured by The Chemours Company)
- "Aquivion" (registered trademark) D79-25BS (manufactured by Solvay Specialty Polymers Japan K.K.)

(15) Ion-conducting hydrocarbon polymer

<Synthesis Example 1>

Synthesis of 2,2-bis(4-hydroxyphenyl)-1,3-dioxolane (hereinafter referred to as K-DHBP) represented by the following general formula

[Chem. 10]

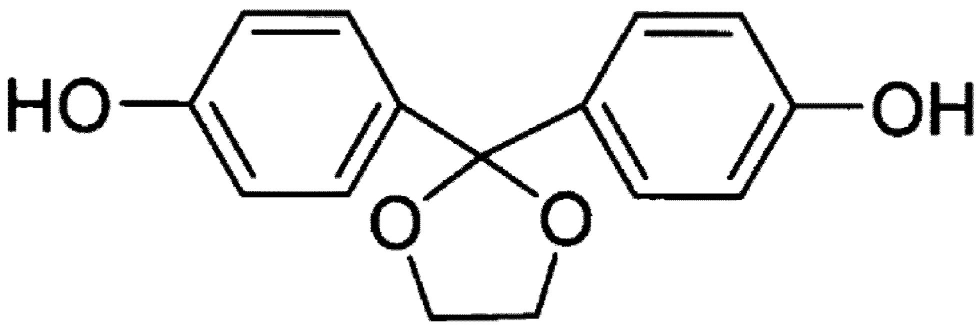

In a 500 mL flask equipped with a stirrer, a thermometer, and a distillation tube, 49.5 g of 4,4'-dihydroxybenzophenone, 134 g of ethylene glycol, 96.9 g of trimethyl orthoformate, and 0.50 g of p-toluenesulfonic acid monohydrate were fed and dissolved. Then, the contents were kept warm and stirred at 78 to 82°C for 2 hours. Further, the internal temperature was gradually raised to 120°C, and the contents were heated until the distillation of methyl formate, methanol, and trimethyl orthoformate completely stopped. After the reaction liquid was cooled to room temperature, the reaction liquid was diluted with ethyl acetate, the organic layer was washed with 100 mL of an aqueous solution of 5% potassium carbonate, the resulting liquid was separated, and the solvent was distilled away. To the residue, 80 mL of dichloromethane was added to precipitate crystals, and the crystals were filtrated and dried to give 52.0 g of dried crystals. The crystals were analyzed by GC, and the crystals were found to contain 99.8% K-DHBP and 0.2% of 4,4'-dihydroxybenzophenone.

<Synthesis Example 2>

Synthesis of disodium-3,3'-disulfonate-4,4'-difluorobenzophenone represented by the following general formula

[Chem. 11]

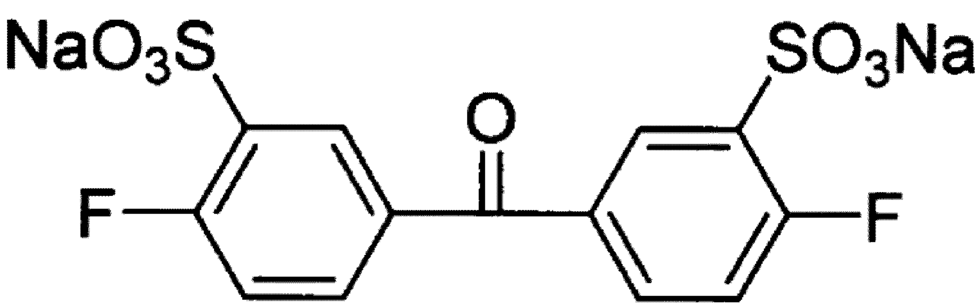

In 150 mL of fuming sulfuric acid (50% $SO_3$) (a reagent from Fujifilm Wako Pure Chemical Corporation), 109.1 g of 4,4'-difluorobenzophenone (a reagent from Sigma-Aldrich) was allowed to react at 100°C for 10 hours. Then, the resulting product was gradually poured into a large amount of water, the resulting mixture was neutralized with NaOH, and then 200 g of sodium chloride was added to the mixture to precipitate a synthesized product. The precipitate obtained was filtrated off and recrystallized from an aqueous ethanol solution to give disodium-3,3'-disulfonate-4,4'-difluorobenzophenone. The compound had a purity of 99.3%. The structure was verified by $^1$H-NMR. Impurities were analyzed quantitatively by capillary electrophoresis (for organic substances) and ion chromatography (for inorganic substances).

<Synthesis Example 3> Synthesize of random copolymer r1

Into a 500 mL three-necked flask equipped with a stirrer, a nitrogen introduction tube, and a Dean-Stark trap, 13.82 g of potassium carbonate (a reagent from Sigma-Aldrich, 100 mmol), 20.66 g of K-DHBP (80 mmol, 50 mol%)

obtained in Synthesis Example 1, 13.51 g of disodium-3,3'-disulfonate-4,4'-difluorobenzophenone obtained in Synthesis Example 2 (32 mmol, 20 mol%), and 10.47 g of 4,4'-difluorobenzophenone (a reagent from Sigma-Aldrich, 48 mmol, 30 mol%) were introduced. The flask was purged with nitrogen, and then, the resulting mixture was dehydrated in 90 mL of NMP and 45 mL of toluene at 180°C, then heated to remove toluene, and polymerized at 200°C for 3 hours. The resulting product was purified by reprecipitation with a large amount of water to obtain a random copolymer r1. The random copolymer had a weight-average molecular weight of 410,000.

<Synthesis Example 4> Synthesize of random copolymer r2

Into a 500 mL three-necked flask equipped with a stirrer, a nitrogen introduction tube, and a Dean-Stark trap, 13.82 g of potassium carbonate (a reagent from Sigma-Aldrich, 100 mmol), 16.53 g (64 mmol, 40 mol%) of K-DHBP obtained in Synthesis Example 1, 5.39 g of 2,2-bis(4-hydroxyphenyl)hexafluoropropane (a reagent from Tokyo Chemical Industry Co., Ltd., 16 mmol, 10 mol%), 13.51 g (32 mmol, 20 mol%) of disodium-3,3'-disulfonate-4,4'-difluorobenzophenone obtained in Synthesis Example 2, and 10.47 g of 4,4'-difluorobenzophenone (a reagent from Sigma-Aldrich, 48 mmol, 30 mol%) were introduced. The flask was purged with nitrogen, and then, the resulting mixture was dehydrated in 90 mL of NMP and 45 mL of toluene at 180°C, then heated to remove toluene, and polymerized at 200°C for 3 hours. The resulting product was purified by reprecipitation with a large amount of water to obtain a random copolymer r2. The random copolymer had a weight-average molecular weight of 390,000.

<Synthesis Example 5> Synthesize of random copolymer r3

Into a 500 mL three-necked flask equipped with a stirrer, a nitrogen introduction tube, and a Dean-Stark trap, 13.82 g of potassium carbonate (a reagent from Sigma-Aldrich, 100 mmol), 20.66 g of K-DHBP (80 mmol, 50 mol%) obtained in Synthesis Example 1, 11.82 g of disodium-3,3'-disulfonate-4,4'-difluorobenzophenone obtained in Synthesis Example 2 (28 mmol, 17.5 mol%), and 11.35 g of 4,4'-difluorobenzophenone (a reagent from Sigma-Aldrich, 52 mmol, 32.5 mol%) were introduced. The flask was purged with nitrogen, and then, the resulting mixture was dehydrated in 90 mL of NMP and 45 mL of toluene at 180°C, then heated to remove toluene, and polymerized at 200°C for 3 hours. The resulting product was purified by reprecipitation with a large amount of water to obtain a random copolymer r3. The random copolymer had a weight-average molecular weight of 400,000.

<Synthesis Example 6> Synthesize of block copolymer b1

(Synthesis of ionic group-free oligomer a1' represented by the following general formula)

Into a 1,000 mL three-necked flask equipped with a stirrer, a nitrogen introduction tube, and a Dean-Stark trap, 16.59 g of potassium carbonate (a reagent from Sigma-Aldrich, 120 mmol), 25.8 g (100 mmol) of K-DHBP, and 20.3 g of 4,4'-difluorobenzophenone (a reagent from Sigma-Aldrich, 93 mmol) were introduced. The flask was purged with nitrogen, and then, the resulting mixture was dehydrated in 300 mL of NMP and 100 mL of toluene at 160°C, then heated to remove toluene, and polymerized at 180°C for 1 hour. The resulting product was purified by reprecipitation with a large amount of methanol to obtain an ionic group-free oligomer a1 (with a hydroxyl group at an end). The oligomer had a number-average molecular weight of 10,000.

Into a 500 mL three-necked flask equipped with a stirrer, a nitrogen introduction tube, and a Dean-Stark trap, 1.1 g of potassium carbonate (a reagent from Sigma-Aldrich, 8 mmol) and 20.0 g (2 mmol) of the ionic group-free oligomer a1 (with a hydroxyl group at an end) were introduced. The flask was purged with nitrogen, and then, the resulting mixture was dehydrated in 100 mL of NMP and 30 mL of cyclohexane at 100°C, and then heated to remove cyclohexane. To the resulting product, 4.0 g of decafluorobiphenyl (a reagent from Sigma-Aldrich, 12 mmol) was added, and the resulting mixture was allowed to react at 105°C for 1 hour. The resulting product was purified by reprecipitation with a large amount of isopropyl alcohol to obtain an ionic group-free oligomer a1' (with a fluoro group at an end) represented by the below-mentioned chemical formula. The oligomer had a number-average molecular weight of 11,000, from which the linker site (a molecular weight of 630) was subtracted to determine the number-average molecular weight of the ionic group-free oligomer a1' to be 10,400.

[Chem. 12]

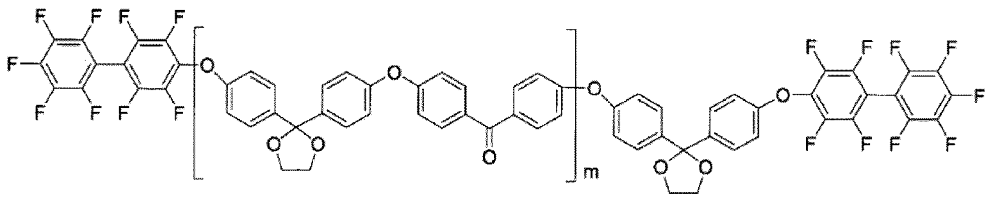

(Synthesis of ionic group-containing oligomer a2 represented by the following general formula)

Into a 1,000 mL three-necked flask equipped with a stirrer, a nitrogen introduction tube, and a Dean-Stark trap, 27.6 g of potassium carbonate (a reagent from Sigma-Aldrich, 200 mmol), 12.9 g (50 mmol) of K-DHBP, 9.3 g of 4,4'-bisphenol (a reagent from Sigma-Aldrich, 50 mmol), 39.3 g (93 mmol) of disodium-3,3'-disulfonate-4,4'-difluorobenzophenone, and 17.9 g of 18-crown-6 (a reagent from Fujifilm Wako Pure Chemical Corporation, 82 mmol) were introduced. The flask was purged with nitrogen, and then, the resulting mixture was dehydrated in 300 mL of NMP and 100 mL of toluene at 170°C, then heated to remove toluene, and polymerized at 180°C for 1 hour. The resulting product was purified by reprecipitation with a large amount of isopropyl alcohol to obtain an ionic group-containing oligomer a2 (with a hydroxyl group at an end) represented by the below-mentioned chemical formula (G4). The oligomer had a number-average molecular weight of 16,000.

[Chem. 13]

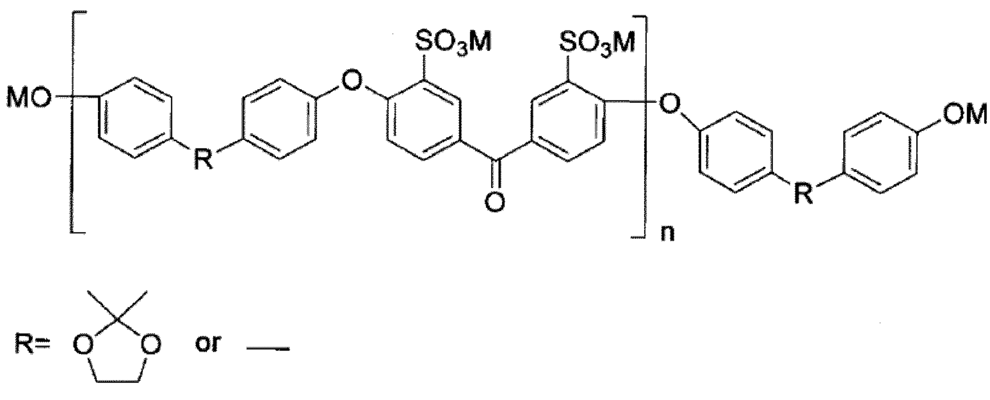

(In the chemical formula, M represents Na or K.)

(Synthesis of oligomer a2 as ionic group-containing segment (A1), oligomer a1 as ionic group-free segment (A2), and block polymer b1 containing octafluorobiphenylene as linker site)

In a 500 mL three-necked flask equipped with a stirrer, a nitrogen introduction tube, and a Dean-Stark trap, 0.56 g of potassium carbonate (a reagent from Sigma-Aldrich, 4 mmol) and 16 g (1 mmol) of the ionic group-containing oligomer a2 (with a hydroxyl group at an end) were introduced. The flask was purged with nitrogen, and then, the resulting mixture was dehydrated in 100 mL of NMP and 30 mL of cyclohexane at 100°C, and then heated to remove cyclohexane. To the resulting product, 11 g (1 mmol) of ionic group-free oligomer a1' (with a fluoro group at an end) was added, and the resulting mixture was allowed to react at 105°C for 24 hours. The resulting product was purified by reprecipitation with a large amount of isopropyl alcohol to obtain a block copolymer b1. The block copolymer had a weight-average molecular weight of 340,000.

(Example 1)

A polymer solution was prepared, in which 14 parts by mass of the ion-conducting hydrocarbon polymer obtained

in Synthesis Example 3 was dissolved in NMP. The solution was filtrated under pressure using a glass fiber filter.

The polymer solution obtained as above-mentioned was applied by cast coating to a polyethylene terephthalate base material using a die coater, dried at 115°C for 10 minutes, and dried at 150°C for 10 minutes to obtain a polyketalketone membrane. Then, after being immersed in an aqueous solution of 10 mass% sulfuric acid at 25°C for 24 hours for proton exchange and a deprotection reaction, the polymer was immersed in a large excess amount of pure water for 24 hours and thoroughly washed to give a B-layer.

"Nafion" (registered trademark) (a commercially available D2020 solution manufactured by The Chemours Company, used with replacement by NMP) and PVDF2751 were dissolved in NMP to give a solution A (having a solid content ratio of 40 mass%/60 mass% as "Nafion"/PVDF and a solid concentration of 10 mass%), which was applied using a die coater to one face of the B-layer obtained as above-mentioned. Then, the resulting product was dried at 80°C for 10 minutes, at 100°C for 5 minutes, and at 120°C for 5 minutes, immersed in a large excess amount of pure water for 24 hours, thoroughly washed, and dried at room temperature to produce an A-layer. An electrolyte membrane (membrane having a thickness of 55 μm) was thus obtained. The characteristics of the membrane were tabulated in Table 1.

[Table 1]

| | | Example 1 | Example 2 | Example 3 | Example 4 | Example 5 | Example 6 | Example 7 | Example 8 | Example 9 |
|---|---|---|---|---|---|---|---|---|---|---|
| A-Layer | Nafion | 40 Mass% | 40 Mass% | 40 Mass% | 40 Mass% | 50 Mass% | 40 Mass % | 20 Mass% | 60 Mass % | 40 Mass% |
| | Aquivion | - | - | - | - | - | - | - | - | - |
| | PVDF2751 | 60 Mass% | - | 60 Mass% | 60 Mass % | - | - | - | - | 60 Mass% |
| | PVDF21510 | - | 60 Mass% | - | - | - | - | - | - | - |
| | PVDF7300 | - | - | - | - | 50 Mass% | 60 Mass% | 80 Mass% | 40 Mass % | - |
| B-Layer | | Synthetic Example 3 | Synthetic Example 4 | Synthetic Example 3 | Synthetic Example 5 | Synthetic Example 3 | Synthetic Example 3 | Synthetic Example 3 | Synthetic Example 3 | Synthetic Example 6 |
| A-Layer Thickness (t1) | μm | 5 | 5 | 10 | 5 | 5 | 5 | 5 | 5 | 5 |
| B-Layer Thickness | μm | 50 | 50 | 50 | 50 | 50 | 50 | 50 | 50 | 50 |
| Dipersion Diameter | μm | 0.22 | 0.41 | 0.25 | 0.28 | 0.52 | 0.55 | 0.61 | 0.57 | 0.55 |
| (t2) | μm | 4.5 | 3.1 | 6.8 | 4.2 | 0.8 | 0.7 | 2.3 | 3.5 | 1 |
| (t1)-(t2)>0 | Note) | | ○ | | | | | | | |
| Crystal Melting Peak Temperature | °C | 128 | 128 | 128 | 128 | 172 | 172 | 172 | 172 | 128 |
| Amount of Pearmeation of Tetravalent Vanadium Ions | $\times 10^{-10} cm^2/min$ | 21 | 23 | 25 | 31 | 161 | 40 | 21 | 185 | 251 |
| Modulus | GPa | 1.7 | 1.8 | 1.7 | 1.9 | 1.7 | 1.7 | 1.7 | 1.5 | 1.6 |
| Elongation | % | 215 | 160 | 204 | 180 | 190 | 185 | 179 | 196 | 240 |
| Strength | MPa | 73 | 74 | 72 | 78 | 73 | 69 | 64 | 78 | 80 |
| Demension Change Rate | % | 4 | 4 | 6 | 4 | 4 | 4 | 4 | 4 | 12 |
| IEC | meq/g | 1.4 | 1.4 | 1.4 | 1.3 | 1.4 | 1.4 | 1.2 | 1.4 | 1.9 |
| Current Efficiency (CE) | % | 99 | 99 | 99 | 99 | 99 | 99 | 99 | 98 | 96 |
| Power Efficiency (VE) | % | 89 | 84 | 84 | 83 | 87 | 85 | 79 | 89 | 89 |

(continued)

| | | Example 1 | Example 2 | Example 3 | Example 4 | Example 5 | Example 6 | Example 7 | Example 8 | Example 9 |
|---|---|---|---|---|---|---|---|---|---|---|
| Voltage Efficiency (EE) | % | 88 | 83 | 83 | 82 | 86 | 84 | 78 | 88 | 95 |
| Decrease Rate of Power Efficiency after 1,000 cycles | % | 0.0 | 3.6 | 1.2 | 0.0 | 1.2 | 0.0 | 6.4 | 6.8 | 3.2 |
| Duarability | Appearance of Membrane | A | B | B | A | C | C | D | D | C |
| Note) In the table, "○" represents satisfying the relation of (t1)-(t2)>0. | | | | | | | | | | |

(Examples 2 to 15)

An electrolyte membrane was obtained in the same manner as in Example 1 except that the kind of the ion-conducting hydrocarbon polymer used for the B-layer, the thickness of the B-layer, the thickness of the A-layer, the kind of PVDF used for the A-layer, and the ratio of ("Nafion" or "Aquivion")/(PVDF) were changed as listed in Table 1 and Table 2. The characteristics of the membrane were tabulated in both of Table 1 and Table 2.

[Table 2]

| | | Example 10 | Example 11 | Example 12 | Example 13 | Example 14 | Example 15 | Example 16 | Comparative Example 1 |
|---|---|---|---|---|---|---|---|---|---|
| A-Layer | Nafion | 40 Mass% | 40 Mass% | 40 Mass% | - | 30 Mass% | 35 Mass% | 40 Mass% | - |
| | Aquivion | - | - | - | 40 Mass% | - | - | - | - |
| | PVDF2751 | 60 Mass% | 60 Mass% | 60 Mass% | 60 Mass% | 70 Mass% | 65 Mass% | - | - |
| | PVDF21510 | - | - | - | - | - | - | 60 Mass% | - |
| | PVDF7300 | - | - | - | - | - | - | - | - |
| B-Layer | | Synthetic Example 3 | Synthetic Example 3 | Synthetic Example 3 | Synthetic Example 3 | Synthetic Example 3 | Synthetic Example 3 | Synthetic Example 4 +PVDF | Synthetic Example 3 |
| A-Layer Thickness (t1) | µm | 5 | 5 | 2 | 5 | 5 | 5 | 5 | - |
| B-Layer Thickness | µm | 35 | 25 | 35 | 35 | 35 | 35 | 50 | 50 |
| Dipersion Diameter | µm | 0.30 | 0.32 | 0.29 | 0.40 | 0.36 | 0.34 | 0.35 | - |
| (t2) | µm | 4.2 | 3.8 | 10 | 3.0 | 3.8 | 3.9 | 3.5 | - |
| (t1)-(t2)>0 | Note) | ○ | ○ | ○ | ○ | ○ | ○ | ○ | - |
| Crystal Melting Peak Temperature | °c | 128 | 128 | 128 | 128 | 128 | 128 | 128 | - |
| Amount of Pearmeation of Tetravalent Vanadium Ions | $\times 10^{-10}cm^2/min$ | 111 | 144 | 120 | 8 | 98 | 104 | 19 | 40 |
| Modulus | GPa | 1.8 | 1.9 | 1.9 | 1.8 | 1.8 | 1.8 | 1.7 | 1.8 |
| Elongation | % | 248 | 245 | 282 | 198 | 213 | 226 | 166 | 250 |
| Strength | MPa | 84 | 82 | 104 | 69 | 78 | 79 | 75 | 135 |
| Demension Change Rate | % | 2 | 2 | 2 | 3 | 3 | 3 | 2 | 3 |
| IEC | meq/g | 1.3 | 1.3 | 1.6 | 1.6 | 1.3 | 1.3 | 1.3 | 1.6 |
| Current Efficiency (CE) | % | 99 | 99 | 99 | 98 | 99 | 99 | 99 | 98 |
| Power Efficiency (VE) | % | 90 | 90 | 90 | 86 | 85 | 87 | 77 | 90 |

(continued)

| | | Example 10 | Example 11 | Example 12 | Example 13 | Example 14 | Example 15 | Example 16 | Comparative Example 1 |
|---|---|---|---|---|---|---|---|---|---|
| Voltage Efficiency (EE) | % | 89 | 89 | 89 | 84 | 84 | 86 | 77 | 88 |
| Decrease Rate of Power Efficiency after 1,000 cycles | % | 0.0 | 0.0 | 0.0 | 4.8 | 4.8 | 3.5 | 0.39 | 9.1 |
| Duarability | Appearance of Membrane | A | C | C | B | C | B | A | E |
| Note) In the table, "O" represents satisfying the relation of (t1)- (t2)>0. | | | | | | | | | |

(Example 16)

A polymer solution was prepared, in which the ion-conducting hydrocarbon polymer obtained in Synthesis Example 4 and PVDF7300 were dissolved in NMP so as to account for 90 mass% and 10 mass% respectively. The solution was filtrated under pressure using a glass fiber filter. The polymer solution obtained as above-mentioned was used in the same manner as in Example 1 to obtain a B-layer.

"Nafion" (registered trademark) (a commercially available D2020 solution manufactured by The Chemours Company, used with replacement by NMP) and PVDF21510 were dissolved in NMP to give a solution A (having a solid content ratio of 40 mass%/60 mass% as Nafion/PVDF and a solid concentration of 10 mass%), which was applied using a die coater to one face of the B-layer obtained as above-mentioned. Then, the resulting product was dried at 80°C for 10 minutes, at 100°C for 5 minutes, and at 120°C for 5 minutes, immersed in a large excess amount of pure water for 24 hours, thoroughly washed, and dried at room temperature to produce an A-layer. An electrolyte membrane (membrane having a thickness of 55 μm) was thus obtained. The characteristics of the membrane were tabulated in Table 2.

(Comparative Example 1)

The polymer obtained in Synthesis Example 3 was used in the same manner as described in Example 1 to produce a B-layer, and an electrolyte membrane composed of only the B-layer was obtained. The characteristics of the membrane were tabulated in Table 2.

Reference Signs List

P: Ion-conducting hydrocarbon polymer

Industrial Applicability

An electrolyte membrane according to the present invention can be used for various electrochemical devices (for example, redox-flow batteries, fuel cells, water electrolysis apparatuses, and chloralkali electrolysis apparatuses). The electrolyte membrane is suitable as a barrier membrane for redox-flow batteries among these devices, and can be used suitably for redox-flow batteries containing vanadium in particular as an active material.

A redox-flow battery including an electrolyte membrane according to the present invention is used preferably as a secondary battery that stores power generated by photovoltaic power generation or wind power generation.

## Claims

1. An electrolyte membrane comprising at least the following: an A-layer composed of an ion-conducting fluorinated polymer and a non-ion-conducting fluorinated polymer; and a B-layer composed of an ion-conducting hydrocarbon polymer, wherein said ion-conducting hydrocarbon polymer is dispersed in said A-layer.

2. An electrolyte membrane comprising at least the following: an A-layer composed of an ion-conducting fluorinated polymer and a non-ion-conducting fluorinated polymer; and a B-layer composed of an ion-conducting hydrocarbon polymer; wherein said electrolyte membrane has the lowest crystal melting peak (Tm) of less than 175°C as measured in a 3rd run by differential scanning calorimetry (DSC).

3. The electrolyte membrane according to claim 1, wherein said ion-conducting hydrocarbon polymer dispersed in said A-layer has a dispersion diameter of 0.55 μm or less.

4. The electrolyte membrane according to claim 1 or 3, wherein said electrolyte membrane satisfies the following numerical formula (1), assuming that the thickness of said A-layer is (11), and that the shortest distance from the outer side of said A-layer to the hydrocarbon polymer in said A-layer is (t2);

$$(t1) - (t2) > 0 \ldots (1).$$

5. The electrolyte membrane according to any one of claims 1, 3, and 4, wherein said electrolyte membrane has the lowest crystal melting peak (Tm) of less than 175°C as measured in a 3rd run by differential scanning calorimetry (DSC).

6. The electrolyte membrane according to any one of claims 1 to 5, wherein said non-ion-conducting fluorinated polymer is at least one selected from the group consisting of poly(vinylidene fluoride), poly(vinylidene fluodide), and a copolymer of vinylidene fluoride and another fluorine-containing monomer.

7. The electrolyte membrane according to any one of claims 1 to 6, wherein said non-ion-conducting fluorinated polymer is a copolymer of vinylidene fluoride and another fluorine-containing monomer.

8. The electrolyte membrane according to any one of claims 1 to 7, wherein said non-ion-conducting fluorinated polymer is a copolymer of vinylidene fluoride and hexafluoropropylene.

9. The electrolyte membrane according to any one of claims 1 to 8, wherein the mass ratio of said ion-conducting fluorinated polymer to said non-ion-conducting fluorinated polymer in said A-layer is 25:75 to 55:45.

10. The electrolyte membrane according to any one of claims 1 to 9, wherein said ion-conducting hydrocarbon polymer contains a structural unit represented by the following chemical formulae (1) and (2):
[Chem. 1]

$$-O-Ar_1-O-Ar_2-O- \qquad (1)$$

[Chem. 2]

$$-O-Ar_1-O-Ar_3-O- \qquad (2)$$

wherein $Ar_1$ and $Ar_2$ are represented by the following chemical formula (3), and $Ar_3$ is represented by the following chemical formula (4):

[Chem. 3]

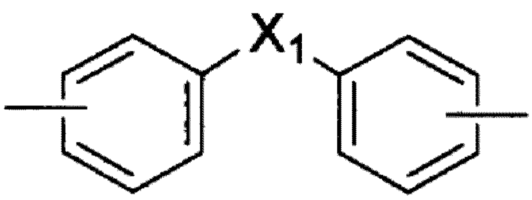

(3)

[Chem. 4]

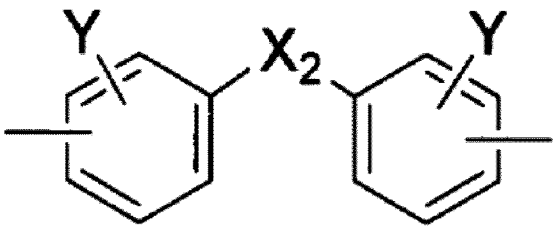

(4)

wherein $X_1$ and $X_2$ independently represent a ketone group (-(C=O)-), ether group (-O-), sulfonic group ($-SO_2-$), or fluorocarbon-containing group ($-C(CF_3)_2-$), and may contain a plurality of the structures; $X_1$ may be a protecting group; and Y represents an ionic group.

11. The electrolyte membrane according to any one of claims 1 to 10, wherein said ion-conducting hydrocarbon polymer is a random copolymer.

12. The electrolyte membrane according to any one of claims 1 to 11, wherein said ion-conducting hydrocarbon polymer has a weight-average molecular weight of 300,000 or more.

**13.** The electrolyte membrane according to any one of claims 1 to 12, wherein the active material permeation of an aqueous solution having a tetravalent-vanadium ion concentration of 1.5 $mol \cdot L^{-1}$ and a sulfuric acid concentration of 3.0 $mol \cdot L^{-1}$ is 1,800 $\times$ $10^{-10}$ $cm^2$/min or less per unit area of said electrolyte membrane.

**14.** The electrolyte membrane according to any one of claims 1 to 13, having a tensile modulus of 0.5 GPa or more at 23°C and at 50% RH.

**15.** The electrolyte membrane according to any one of claims 1 to 14, wherein said A-layer is laminated on only one face of said B-layer.

**16.** The electrolyte membrane according to any one of claims 1 to 15, for use in a redox-flow battery.

**17.** A redox-flow battery comprising said electrolyte membrane according to any one of claims 1 to 16, wherein said electrolyte membrane is used as a barrier membrane configured to isolate and separate a cathode and an anode.

**18.** The redox-flow battery according to claim 17, wherein said electrolyte membrane is disposed in such a manner that said A-layer side of said electrolyte membrane is on the cathode side.

[Fig. 1]

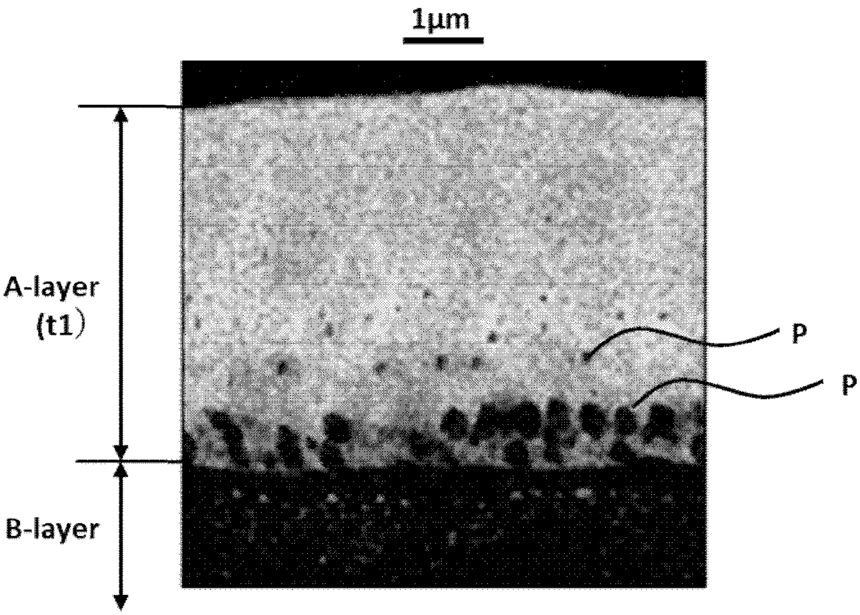

**INTERNATIONAL SEARCH REPORT**

International application No. PCT/JP2021/008903

A. CLASSIFICATION OF SUBJECT MATTER
H01M 8/1039(2016.01)i; H01M 8/1044(2016.01)i; H01M 8/1053(2016.01)i; H01M 8/1067(2016.01)i; H01M 8/18(2006.01)i
FI: H01M8/18; H01M8/1039; H01M8/1044; H01M8/1053; H01M8/1067
According to International Patent Classification (IPC) or to both national classification and IPC

B. FIELDS SEARCHED

Minimum documentation searched (classification system followed by classification symbols)
H01M8/1039; H01M8/1044; H01M8/1053; H01M8/1067; H01M8/18

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2013-77554 A (TORAY INDUSTRIES, INC.) 25 April 2013 (2013-04-25) claim 1, paragraphs [0020], [0154], [0181], [0182] | 1-18 |
| A | JP 2009-81129 A (TORAY INDUSTRIES, INC.) 16 April 2009 (2009-04-16) claim 1, paragraphs [0016]-[0018], [0058] | 1-18 |

☐ Further documents are listed in the continuation of Box C.
☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 April 2021 (09.04.2021) | 20 April 2021 (20.04.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/008903

| Patent Documents referred in the Report | Publication Date | Patent Family | Publication Date |
|---|---|---|---|
| JP 2013-77554 A | 25 Apr. 2013 | (Family: none) | |
| JP 2009-81129 A | 16 Apr. 2009 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- JP 2008512844 A
- JP 2015502629 A

### Non-patent literature cited in the description

- **THEODORA W. GREENE.** Protective Groups in Organic Synthesis. John Wiley & Sons, Inc, 1981